(19) Europäisches Patentamt
European Patent Office
Office européen des brevets

(11) **EP 4 270 098 A2**

(12) **EUROPEAN PATENT APPLICATION**

(43) Date of publication:
**01.11.2023 Bulletin 2023/44**

(21) Application number: **23197541.8**

(22) Date of filing: **26.11.2021**

(51) International Patent Classification (IPC):
**G02C 7/02** *(2006.01)*

(52) Cooperative Patent Classification (CPC):
**G02C 7/06; G02C 7/022; G02C 7/16;**
G02C 2202/24

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2020 EP 20211629**

(62) Document number(s) of the earlier application(s) in accordance with Art. 76 EPC:
**21820562.3 / 4 248 266**

(71) Applicant: **Carl Zeiss Vision International GmbH 73430 Aalen (DE)**

(72) Inventor: **BRAUNGER, Dieter 73457 Essingen (DE)**

(74) Representative: **PATERIS Patentanwälte PartmbB Danckelmannstraße 9 14059 Berlin (DE)**

Remarks:
This application was filed on 14-09-2023 as a divisional application to the application mentioned under INID code 62.

(54) **SPECTACLE LENS DESIGN, SPECTACLE LENS KIT, DATA SET, COMPUTER-IMPLEMENTED METHOD OF DESIGNING A SPECTACLE LENS AND METHOD OF MANUFACTURING A SPECTACLE LENS**

(57) A spectacle lens design for a spectacle lens (2) to be positioned relative to the eye of a wearer according to a given as-worn position is provided. The spectacle lens design includes
- a clear distance zone (4),
- a clear near zone (5), and
- an intermediate zone (6) located between the clear distance zone (4) and the clear near zone (5) such that, when a spectacle lens (2) manufactured according to the spectacle lens design is positioned according to the as-worn position, the line of sight moves through the intermediate zone (6) when the viewing direction changes from viewing through clear distance zone (4) to viewing through the clear near zone (5) or vice versa. This intermediate zone (6) includes at least one of the following: focusing structures providing a focal power resulting in a myopic defocus when a spectacle lens (2) manufactured according to the spectacle lens design is positioned according to the as-worn position or diffusing structures (6a) leading to a diffusion of light passing the intermediate zone (6) According to the invention, at least one of the clear distance zone (4) and the clear near zone (5) extends over the whole width of the spectacle lens design.

In addition, a computer-implemented method of designing a spectacle lens and method of manufacturing a spectacle lens are provided

Fig. 1

## Description

The present invention relates to a spectacle lens design for myopia control as well as to a spectacle lens kit and a data set for a spectacle lens design. In addition, the invention relates to a method of manufacturing a spectacle lens.

The prevalence of myopia (short sightedness) is increasing rapidly. Myopia significantly increases the risk of retinal detachment, (depending on the level of myopia), posterior cataract and glaucoma. The optical, visual and potential pathological effects of myopia and its consequent inconvenience and cost to the individual and community, makes it desirable to have effective strategies to slow the progress, or prevent or delay the onset of myopia, or limit the amount of myopia occurring in both children and young adults.

Until the turn of the millennium, the conventional approach for myopia treatment was under-correction by addressing only the on-axis or central field refractive state, as it is, e.g., explained in detail in WO 2007/092853 A2.

Other optical methods employ bifocal or progressive aspheric lens spectacles or bifocal contact lenses as potential strategies for retarding the progression of myopia. For example, WO 1999/66366 A1 discloses the use of a progressive ophthalmic lens designed to reduce the rate of juvenile myopia progression. US 2003/058407 A1 discloses a method for treating myopia progression in patients who also exhibit near point esophoria by selectively prescribing bifocal contact lenses. WO 2006/004440 A2 discloses the use of bifocal contact lenses with various arrangements of vision correction area and myopic defocus area to counter progression of myopia.

A similar approach for controlling myopic progression is known from CooperVision® which sell contact lenses under the trademark MiSight® 1 day. The same approach is used by Hong Kong Polytechnic University's DISC contact lenses, the functionality of which is e.g. disclosed in WO 2006/034652 A1. According to this document the contact lens includes a central optical zone having a primary optical power and at least one peripheral optical zone having a secondary optical power (i.e. a bifocal effect) to treat the progression of myopia. The idea behind this technology is to provide one focus in front and one focus behind the retina. However, studies on the efficacy of methods that employ bifocal devices generally show only limited efficacy.

In the case of bifocal or progressive spectacles, compliance of the wearer to always look through the near addition portion of the spectacles for near work cannot be guaranteed. And this is particularly so when dealing with children.

WO 2005/055891 A1 and WO 2007/092853 A2, however, disclose that peripheral retinal image (i.e. peripheral vision) plays a major role in determining overall eye length, and is an effective stimulus that promotes peripheral and total eye growth that results in axial elongation, an overall increase in eye size and myopia.

In a key experiment described in WO 2005/055891 A1, primates were reared with annular diffusing lenses placed in front of the eye. The annular diffusing lenses allowed light rays from on axis, central field objects to reach the eye unobstructed. The same annular diffusing lenses scattered or diffused light rays from off-axis, peripheral field objects. This scattering induced form deprivation only to off-axis visual objects in the peripheral field, while maintaining clear vision for the central field. It is known to vision scientist working on myopia development that form deprivation applied to the entire visual field (or central field) of the eye induces axial growth leading to myopia. In the experiment disclosed in WO 2005/055891 A1, involving form deprivation to only the peripheral field, the eye also developed myopia due to axial elongation and eye growth.

In an extension to the experiment described in WO 2005/055891 A1, the annular diffusing lenses were removed from some eyes following development of substantial amounts of myopia. When the annular diffusing lenses were removed, the amount of myopia in the primates decreased.

Further, in a parallel extension to the experiment, for other eyes, in addition to removal of the annular diffusing lenses following development of substantial amounts of myopia, central vision of the primate's eye was eliminated, by using an Argon (blue-green) laser to ablate the macular portion of the retina by photocoagulation, essentially blinding central vision while sparing peripheral vision. Even when on-axis central, foveal vision was interrupted in this manner, the decrease in myopia remained similar to when central vision was not disrupted.

Based on learning from these experiments that demonstrate that the peripheral retinal image (i.e. peripheral vision) plays a major role in determining overall eye length, and is an effective stimulus that promotes peripheral and total eye growth that results in axial elongation, an overall increase in eye size and myopia, WO 2005/055891 A1 discloses a method of abating, retarding or eliminating the progression of myopia in an individual by controlling off-axis aberrations through manipulating the curvature of field of a visual image in a predetermined fashion and ultimately altering, reducing or eliminating eye axial elongation. In this method by which myopia progression may be retarded (and in many cases, halted or reversed) an optical device having a predetermined off-axis aberration-controlled design that abates, retards or eliminates eye growth while simultaneously providing clear central imaging is used.

The authors of WO 2005/055891 A1 describe a method and apparatus for controlling optical aberrations to alter relative curvature of field by providing ocular apparatuses, systems and methods comprising a predetermined corrective factor to produce at least one substantially corrective stimulus for repositioning peripheral, off-axis, focal points relative to the central, on-axis or axial focal point while maintaining the positioning of the central, on-axis or axial focal point on the retina. The method and apparatuses are used to provide continuous, useful clear visual images while simultaneously retarding or abating the progression of myopia.

The authors propose e.g. an optical device, such as spectacles, contact lenses, artificial corneal devices such as on-lays and in-lays, corneal implants, anterior chamber lenses or intraocular lenses, or employing interventions, such as methods for corneal and epithelial remodeling and sculpting including orthokeratology and refractive surgery such as epikeratophakia, thermokeratoplasty, LASIK, LASEK and PRK that can provide a resultant negative relative curvature of field at the retina, and that in addition, in order to continue to provide good central visual acuity for critical visual tasks, the optical device or optical intervention should ensure good focus of central field image to the retina.

The documents WO 2005/055891 A1 and WO 2007/092853 A2 disclose a suitable spectacle lens. This spectacle lens is designed such that it would generate a negative relative curvature of field on the eye. According to the authors this arrangement is advantageous over conventional under-correction approaches as the central, on-axis image point is focused sharply to the fovea enabling good visual acuity. The peripheral image points, due to the negative relative curvature of field, are focused more anteriorly, or in front (i.e. in the direction against the direction of light in the eye) of the retina. This has the effect of producing a relative under-correction to the peripheral field, which, from the experiment results, would control eye growth and axial elongation. That is, due to the more anterior location of the off-axis, peripheral field image points, stimulus to axial growth is significantly reduced, eliminated or reversed in the eye, leading to reduction or elimination of myopia development or reduction and even reversal of myopia progression.

The first versions of spectacle lenses following this approach are developed by the Carl Zeiss Vision group in cooperation with the Brian Holden Vision Institute. One of the first spectacle lens designs following this approach is e.g. disclosed in WO 2007/041796 A1.

According to Prof. Schäffel in a presentation "Individualisierte Myopiebehandlung bei Kindern - Prof. Dr. Frank Schaeffel und Dr. Hakan Kaymak (Innovationssymposium 2019)" held on January 19, 2019 in Düsseldorf Essilor markets a similar design under the trademark Myopilux.

WO 2010/075319 A2 also refers to the importance of peripheral retinal image determining myopic eye growth. The document proposes a therapeutic treatment method for preventing, ameliorating, or reversing eye-length- related disorders, the therapeutic treatment method comprising: identifying, in a patient, an eye-length-related disorder; and inducing artificial blurring of the patient's peripheral vision in order to decrease an average spatial frequency of images input to the retina of the eye past a threshold spatial frequency to inhibit further lengthening of the patient's eye. In particular, the document proposes providing the patient with spectacle lenses having a first area including a plurality of first elements selected from the group consisting of: (i) bumps on a surface of the spectacle lens; (ii) depressions on the surface of the spectacle lens; (iii) first translucent inclusions in a spectacle lens material; and (iv) first transparent inclusions in the spectacle lens material, the first transparent inclusions having a refractive index different from that of the spectacle lens material. The elements in general are point-shaped elements having a non-zero point density in a range between 0 and 8 dots per $mm^2$.

Improvements of this kind of spectacle lenses are disclosed in WO 2018/026697 A1 and WO 2019/152438 A1, respectively.

In particular, WO 2018/026697 A1 discloses a pair of eyeglasses, comprising: eyeglass frames; and a pair of spectacle lenses mounted in the frames, the spectacle lenses comprising a point pattern distributed across each spectacle lens, the point pattern comprising an array of dots spaced apart by a distance of 1 mm or less, each point having a maximum dimension of 0.3 mm or less.

WO 2019/152438 A1 discloses a spectacle lens, comprising: a lens material having two opposing curved surfaces; and a scattering region surrounding a clear aperture, wherein the scattering region has a plurality of spaced apart scattering centers sized and shaped to scatter incident light, the scattering centers being arranged in a pattern that includes an irregular variation in spacing between adjacent scattering centers and/or an irregular variation in scattering centers size.

WO 2010/075319 A2, WO 2018/026697 A1, WO 2019/152438 A1 and WO 2020/014613 A1 describe spectacle lenses with artificial peripheral scattering while WO 2020/113212 A1 and WO 2020180817 A1 describe spectacle lenses with a contrast reduction region comprising scattering centers and/or one or more lenslets for reducing image contrast. Introducing artificial peripheral scattering is somewhat in contradiction to the findings described in WO 2005/055891 A1 and WO 2007/092853 A2 with respect to annular diffusing lenses, however, the results of respective trials based on SightGlass Vision's DOT spectacle lenses have been disclosed to be promising.

Hong Kong Polytechnic University and Hoya recently disclosed a different kind of spectacle lenses following the general approach described in WO 2005/055891 A1. Hoya sells such spectacle lenses under the trademark MyoSmart. The spectacle lenses are known as MSMD (multi segment myopic defocus) lenses. The respective technical concept is known as D.I.M.S. (Defocus Incorporated Multiple Segments) technology. Details are, for example, disclosed under https://www.hoyavision.com/en-hk/discover-products/for-spectacle-wearers/special-lenses/myosmart/. Respective spectacle lenses are disclosed in US 2017/131567 A1. The spectacle lenses comprise a central zone providing full correction and a plurality of microlenses/lenslets surrounding the central zone and providing an additional power of e.g. approximately 3.5 D. A similar approach is used in Essilor's Stellest spectacle lenses being described in detail in EP 3 553 594 A1, EP 3 561 578 A1, WO 2019/166653 A1, WO 2019/166654 A1, WO 2019/166655 A1, WO 2019166657 A1, WO 2019/166659 A1 and WO 2019/206569 A1, respectively. The microlenses/lenslets are aspherical and have an optical power in their geometrical center which lies in the range between 2.0 dpt and 7.0 dpt in absolute value, and an optical power in their periphery which lies in the range between 1.5 dpt and 6.0 dpt in absolute value. The refractive optical power provided by the aspherical microlenses/lenslets exceeds the refractive power of the clear central zone by 0.5 dpt or more.

Also WO 2020/014613 A1 assigned to Sightglass Vision Inc. recently disclosed a myopia control spectacle lens that may contain one or more defocus elements, i.e. a myopia control spectacle lens may contain a clear center, free of said defocus elements treating children having, or suspected of having, myopia by having the children wear spectacles with myopia control lenses provides a safe, efficient, and non-invasive method for reducing the progression of juvenile myopia. Exemplarily, the document refers to regions that comprise island-shaped lenses.

It is noted that WO 2016/168746 A1 discloses prescription spectacle lenses comprising a plurality of microlenses or microprisms, respectively, and which, except of the missing clear central zone, resemble those of Hong Kong Polytechnic University and Hoya as well as Essilor described in the foregoing paragraphs. According to the authors of WO 2016/168746 A1 such multifocal spectacle lenses are quite thin and have relatively large optically functional portions for the different lens powers. The multifocal spectacle lenses may be suitable for myopic persons, but no information is provided with respect to lens properties being suitable for controlling myopia progression.

CN 207249272 U discloses a spectacle lens having a spectacle lens design that includes a distance zone and a near zone. In addition, CN 207249272 U discloses a visual blocking device which can be removably fixed to the spectacle lens or printed onto a surface using a temporary ink that can be removed from the surface by cleaning. The visual blocking device may be translucent, frosted or opaque.

CN 111796436 A discloses a single vision spectacle lens for slowing down myopia progression with a central area providing a prescribed power and a defocus refractive area surrounding the central area. The defocus refractive area consists of micro lenses.

WO 2020/113212 A1, which is regarded as closest state of the art discloses spectacle lenses with a contrast reduction region comprising scattering centers and/or one or more lenslets for reducing image contrast.

Within the contrast reduction region a first clear aperture for distance vision and a second clear aperture for near vision are present. The widths of the first clear aperture and the second clear aperture are delimited by the contrast reduction region. In some embodiments described in WO 2020/113212 A1 the first clear aperture and the second clear aperture are separated from each other by a portion of the contrast reduction region so that the line of sight passes the said portion of the contrast reduction region when the viewing direction changes from viewing through first clear aperture to viewing through the second clear aperture. However, the contrast reduction region may make the spectacle lens to appear dirty in the outside the central contrast reduction region. This may lead to discomfort for the wearer.

It is a first objective of the present invention to provide a spectacle lens design that includes a clear zone for distance vision and a clear zone for near vision providing less discomfort while still being effective in at least retarding myopia progression as well as a spectacle lens kit and a data set based on said spectacle lens design.

It is a second objective of the present invention to provide computer-implemented method of designing a spectacle lens that includes a clear zone for distance vision and a clear zone for near vision providing less discomfort while still being effective in at least retarding myopia progression.

It is a third objective of the present invention to provide a method of manufacturing a spectacle lens that includes a clear zone for distance vision and a clear zone for near vision providing less discomfort while still being effective in at least retarding myopia progression.

The first objective is achieved by lens designs as claimed in claims 1 to 3, 5 and 7, by a spectacle lens kit as claimed in claim 16 and by a data set as claimed in claim 17, the second objective is achieved by computer-implemented methods of designing a spectacle lens as claimed in claims 18 to 21 and 38, and the third objective is achieved by methods of manufacturing a spectacle lens as claimed in claims 25 to 29 and 39. The depending claims contain further developments of the invention.

The following definitions are used within the scope of the present description:

Additional power

In the context of the present specification, the term "additional power" applies to a focal power that is added to the focal power of a spectacle lens, where the focal power of a spectacle lens provides, assisted by accommodation, a focused image on the fovea and the additional power, when added to the focal power of a spectacle lens, provides for a myopic defocus. The additional power must not be confused with the addition power of a progressive addition lens. The addition power of a progressive addition lens, on the other hand, specifies the difference between the vertex power in the near portion of the spectacle lens and in the distance portion of the spectacle lens.

## Additional zone

In the context of the present specification, the term "additional zone" applies to a zone that is located at the upper or lower rim of a spectacle lens design and includes focusing structures providing a focal power resulting in a myopic defocus when a spectacle lens manufactured according to the spectacle lens design is positioned according to the as-worn position or diffusing structures leading to a diffusion of light passing the additional zone.

## As-worn position

The as-worn position is the position, including orientation, of the spectacle lenses relative to the eyes and face during wear (DIN ISO 13666:2019, section 3.2.36). The as-worn position is determined by the as-worn pantoscopic angle, the as-worn face form angle and the vertex distance. The as-worn pantoscopic angle is the vertical angle between the horizontal and the perpendicular to a reference line passing through the apex of the grooves of the upper and lower rims of the frame in the vertical plane containing the primary direction (DIN ISO 13666:2019, section 3.2.37), where the primary direction is the direction of the line of sight, usually taken to be the horizontal, to an object at an infinite distance measured with habitual head and body posture when looking straight ahead in unaided vision (DIN ISO 13666:2019, section 3.2.25) and the line of sight is the ray path from the point of interest (i.e. point of fixation) in object space to the centre of the entrance pupil of the eye and its continuation in image space from the centre of the exit pupil to the retinal point of fixation (generally the foveola) (DIN ISO 13666:2019, section 3.2.24). Typical values of the as-worn pantoscopic angle lie in the range between -20 and +30 degree. The as-worn face form angle is the horizontal angle between the primary direction and the perpendicular to a reference line passing through the apex of the grooves of the nasal and temporal rims of the frame in the horizontal plane containing the primary direction (DIN ISO 13666:2019, section 3.2.38). Typical values of the as-worn face form angle lie in the range between -5 and +30 degree. The vertex distance is the horizontal distance between the back surface of the spectacle lens and the apex of the cornea, measured with the eyes in the primary position (DIN ISO 13666:2019, section 3.2.40), where the primary position is the position of the eye when looking in the primary direction (DIN ISO 13666:2019, section 3.2.26). Typical valued of the vertex distance lie in the range between 5 mm and 30 mm. The as-worn position may be an individual as-worn position determined for a specific individual or a generic as-worn position determined for a defined group of wearers.

## Clear zone

In the context of the present specification, the term "clear zone" applies to a zone of a spectacle lens design or a spectacle lens that provides neither a myopic defocus nor a diffusion in foveal vision when a wearer looks through the clear zone with the spectacle lens being positioned according the specified as-worn position. Furthermore, at least a section of the clear zone allows for achieving, if necessary assisted by accommodation, a focused image on the fovea. For example, there may be zones of a spectacle lens design or a spectacle lens that do neither provide a myopic defocus nor a diffusion in foveal vision when a wearer looks through the respective zone but show a residual astigmatic error leading to a blurred image. Such a zone may be regarded as a clear zone in the meaning used in the present specification. In this example, only a section of the clear zone would allow for achieving a focused image on the fovea. In other examples of the clear zone, the region allowing for achieving a focused image on the fovea may extend over the whole clear zone.

The term "clear distance zone" is used for a clear zone of a spectacle lens design or a spectacle lens through which the wearer looks for viewing distant objects, i.e. for a clear zone that resembles a distance portion of a spectacle lens, i.e. a portion of a multifocal lens or progressive-power lens having the dioptric power for distance vision, as defined in DIN ISO 13666:2019, section 3.15.1. Distance vision may be assumed when viewing objects that have e.g. a distance of 2 m up to infinity.

The term "clear near zone" is used for a clear zone through which the wearer looks for viewing a near object, i.e. for a clear zone that resembles a near portion of a spectacle lens, i.e. a portion of a multifocal lens, progressive-power lens or degressive-power lens (3.7.9) having the dioptric power for the near vision distance, as defined in DIN ISO 13666:2019, section 3.15.5. According to DIN ISO 13666:2019, section 3.2.44, the near vision distance is the working distance with the individual's habitual near working plane as the object plane. This is generally taken as the distance, often 40 cm, at which a person reads, but the task could equally be sewing or fine assembly. Typical near object are at a distance of 0.8 m or less, at a distance in the range between 0.3 m and 0.8 m.

In some variants of the clear zone, a number of structures may be located within the clear zone. Such structures would provide an effect in addition to the focal power provided by the spectacle lens in the clear zone. However, the area occupied by the structures within the clear zone should not exceed 20 % of the whole area of the clear zone. In other variants, the aperture is free of any structures so that the aperture only exhibits the focal power provided by the spectacle lens.

Data carrier signal

A data carrier signal is a pulse or a series of pulses of electricity or light that represents data as it travels over a wired or wireless network.

Diffusing structures

In optics, a diffuser (also called a light diffuser or optical diffuser) is an optical element that is made of any material that diffuses or scatters light in some manner to transmit soft light. Diffuse light can be easily obtained by reflecting light from a white surface, while more compact diffusers may use translucent material, including ground glass, Teflon, holographs, opal glass, and greyed glass. Scattering may be achieved by scattering centers which may be point-shaped, examples of which are, e.g., disclosed in WO 2010/075319 A2, WO 2018/026697 A1, WO 2019/152438 A1 and WO 2020/014613 A1, respectively. Scattering centers may also be line-shaped, e.g. in case of a contiguous connection having a not continuous transition and/or a not smooth transition. In the context of the present invention, scattering centers and other structures that are able to diffuse light are considered to be diffusing structures.

Focal power

The term "Focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (DIN ISO 13666:2019, section 3.10.2) and which is usually considered in the prescription by the "cylinder" value or, abbreviated, "cyl". The "vertex power" is the reciprocal of the paraxial vertex focal length (DIN ISO 13666:2019, section 3.10.7). Within the scope of the present description, a beam is to be considered to be a paraxial pencil of rays if its diameter does not exceed 0.05 mm, in particular 0.01 mm.

Focusing structures

In the context of the present specification, the term "focusing structures" applies to structures providing a focus or a plurality of foci. In particular, such a focusing structure may comprise a micro-lens, a lenslet, a bump, etc. as described above with reference to the prior art.
In the context of the present invention, the term "lenslet" or "microlens" refers either to a small convex structure in the approximately spherical or ellipsoidal shape of a lens that is provided on a surface of a spectacle lens and has lateral dimensions that are at least by an order of magnitude smaller than the dimensions of the spectacle lens itself, or to a small area with a refractive index distribution that is provided in a spectacle lens body where the refractive index distribution has lateral dimensions that are at least by an order of magnitude smaller than the dimensions of the spectacle lens itself.

Fully surrounded

In the context of the present invention, a zone is considered to fully surround another zone if it delimits said other zone in every direction. For example, an annular zone fully surrounds a zone in the center of the annulus.

Intermediate zone

In the context of the present invention, an intermediate zone is a zone that is situated between two other zones and separates said two other zones at least in the direction of a given path, in particular, in the direction of the path along which line of sight moves when the eye changes from viewing a distant object to viewing a near object, or vice versa. In the context of the present invention, the intermediate zone includes focusing structures providing a focal power resulting in a myopic defocus when a spectacle lens manufactured according to the spectacle lens design is positioned according to the as-worn position or diffusing structures leading to a diffusion of light passing the intermediate zone.

Myopic defocus

The term "myopic defocus" refers to a situation in which light focuses in front of the fovea by such a distance that a focused image on the fovea cannot be achieved, even when assisted by accommodation. A peripheral myopic defocus refers to a situation in which light focuses on the fovea in central vision while it focuses in front of the fovea in peripheral vision.

Prescription

The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain prism and base values. Moreover, the prescription may contain further values, for example the "add" value in the case of multifocal spectacle lenses, said "add" value specifying the difference between the vertex power in the near portion of the spectacle lens and in the distance portion of the spectacle lens. A value "PD" for the interpupillary distance may also be contained in the prescription.

Representation of a spectacle lens design

In the context of the present invention, the expression "representation of a spectacle lens design" refers to an implementation of a spectacle lens having the respective design features (physical representation of the spectacle lens design) or to a numerical data set describing the design features (numerical representation of the spectacle lens design). For example, such a data set may be stored in a memory of a computer or on a computer-readable (particularly non-transitory) storage medium. In addition, the data set may be retrievable from a data network like, for example, the internet or a local area network (LAN). A dataset resembling a representation of a progressive spectacle lens design may include, in particular, a description of the geometric shape and the medium of the progressive spectacle lens. Such a description can e.g. include a mathematical description of the front surface, the rear surface, the arrangement of these surfaces in relation to one another (including the thickness) and the edge delimitation of the progressive spectacle lens as well as the refractive index distribution of the medium of which the progressive lens is to be made. The representation can be in coded or even in encrypted form. The term medium here means the material(s) or the substance the spectacle lens is made of.

The representation of the progressive spectacle lens design may consist of or in addition or alternatively include computer-readable instructions for controlling one or more manufacturing machines (e.g. casting, grinding, milling, lapping and/or polishing machines) in order to produce a spectacle lens having the respective design features.

Semi-finished blank

The term "semi-finished blank" refers to a piece of optical material with one optically finished surface for the making of a spectacle lens (DIN ISO 13666:2019, section 3.8.1)

Spectacle lens

A spectacle lens is an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1).

The term "uncut spectacle lens" (DIN ISO 13666:2019, section 3.8.8) is a finished lens (3.8.7) prior to edging (3.8.10). A "cut spectacle lens" is therefore a finished lens after edging.

The present invention refers to both "uncut" and "cut spectacle lenses" and the respective designs, since the position of wear may be determined based on respective markings as defined in sec. 3.15.25 of said standard (see DIN ISO 13666:2019, section 3.9 for measurement purposes). However, the position of wear may be derived also from the rim contour of a "cut spectacle lens".

Spectacle lens design

The term optical spectacle lens design is used to denominate the calculated/predetermined or defined optical properties of a spectacle lens, typically for a predetermined specific wearer, taking into consideration a position/arrangement of the spectacle lens relative to a model of an eye of the wearer of the spectacle lens, a position/arrangement of a model of an object to be viewed by the wearer of the spectacle lens for a specific use condition of the spectacle lens as well as a model of the physiological visual properties of the wearer of the spectacle lens.

Particularly, the optical spectacle lens design may comprise a distribution of optical power across an effective area of a spectacle lens as perceived by a predetermined wearer of the spectacle lens for a predetermined as-worn position relative to the wearer's (model) eye and a predetermined object distance model. The calculation of the distribution of the optical power is based on the distance and orientation of the spectacle lens relative to the model eye, the distance and orientation of the spectacle lens relative to the model object as well as physiological parameters of the spectacle wearer such as the wearer's visual deficiencies, namely e.g. the wearer's ametropia, the wearer's ability to accommodate and the wearer's pupillary distance.

The term geometric spectacle lens design means the geometry of the spectacle lens providing the calculated optical properties of a spectacle lens described in the forgoing for the spectacle wearer.

The term target optical spectacle lens design means, a draft optical spectacle lens design, the optical properties of which correspond to or are equal to target optical properties. The term actual optical spectacle lens design means calculated optical properties of a spectacle lens being received as a result of an optimization process/calculation aiming to achieve the target optical spectacle lens design as close as possible. Such an optimization process/calculation in particular for progressive spectacle lenses or customized single vision lenses is e.g. disclosed in Werner Köppen: Konzeption und Entwicklung von Progressivgläsern, in Deutsche Optiker Zeitung DOZ 10/95, S. 42-46.

Such optical or geometric spectacle lens designs may be stored on a computer-readable (e.g. non-transitory and/or electronic and/or optical) data carrier. Moreover, spectacle lenses manufactured according to the spectacle lens design can be considered physical representations of the spectacle lens design.

Essential steps of an example of a method for designing a spectacle lens are outlined in the following: In a first step, individual user data or application data of the spectacle wearer are recorded. This includes the acquisition of (physiological) data that can be assigned to the spectacle wearer and the acquisition of usage conditions under which the spectacle wearer will wear the spectacles to be designed.

The physiological data of the spectacle wearer may include e.g. the wearer's ametropia and the wearer's ability to accommodate, which are determined by means of a refraction measurement and which are regularly included in a prescription in the form of prescription values for sphere, cylinder, axis, prism and base as well as addition. Furthermore, e.g. the pupillary distance and the pupil size were determined under different lighting conditions. The age of the wearer has an influence on the ability to accommodate and pupil size and may therefore also be taken into consideration. The convergence behavior of the eyes results from the pupillary distance for different viewing directions and object distances.

The conditions of use include the as-worn position of the spectacle lenses in front of the eye (usually in relation to the eye's pivot point) and the object distances for different viewing directions under which the spectacle wearer should see clearly. The seat of the spectacle lenses in front of the eye can e.g. be determined by recording the corneal vertex distance as well as anterior and lateral inclination. These data are included in an object distance model, for which a ray tracing method can be applied, where the object distance model contains the information to which object distance a viewing direction through the spectacle lens corresponds. In other word, the object distance model maps viewing directions to object distances.

In a subsequent step, a draft design for the spectacle lens with a large number of evaluation points is determined on the basis of this recorded data. The draft design includes target optical properties for the spectacle lens at the respective evaluation point. The target properties include e.g. the permissible deviation from the prescribed spherical and astigmatic power, taking into account the addition, distributed over the entire spectacle lens, as specified by the arrangement of the lens in front of the eye and the underlying distance model.

Furthermore, a design of surface geometries for the front and back surfaces as well as a design for a refractive index distribution over the entire spectacle lens are specified. E.g. the front surface can be selected as a spherical surface and the back surface as a varifocal surface. Both surfaces could also initially be selected as spherical surfaces. The choice of surface geometry for the first draft generally only determines the convergence (speed and success) of the optimization method used. It should be assumed, for example, that the front surface is to retain the spherical shape and the back surface is given the shape of a varifocal surface.

In a further step, the course of main rays is determined through the large number of evaluation points. Possibly, a local wavefront can be established for each of the main rays in a vicinity of the respective main ray. According to Werner Köppen: Design and Development of Progressive Lenses, in Deutsche Optiker Zeitung DOZ 10/95, pp. 42-46, the number of evaluation points is usually in the range between 1000 and 1500. EP 2 115 527 B1 suggests a number of over 8000 evaluation points. Although the refractive index is usually dependent on the wavelength, the dispersion is generally not taken into account and the calculation is carried out for a so-called design wavelength. However, it cannot be ruled out that an optimization process takes different design wavelengths into account, e.g. is described in EP 2 383 603 B1.

In a subsequent step, the above optical properties of the spectacle lens at the evaluation points are determined by determining an influence of the spectacle lens on the beam path of the main rays and, if necessary, the local wavefronts in the vicinity of the respective evaluation point.

In a further step, the design of the spectacle lens is evaluated depending on the determined optical properties and the individual user data. The back surface geometry and as the case may be the refractive index distribution of the design of the spectacle lens may be modified by minimizing a target function such as e.g.

$$ F = \sum_m P_m \sum_n W_n \left( T_n - A_n \right)^2 $$

where $P_m$ represents the weighting at the evaluation point m, $W_n$ the weighting of the optical property n, $T_n$ the target value of the optical property n at the respective evaluation point m and $A_n$ denotes the actual value of the optical property n at the evaluation point m.

In other words, the local surface geometry of the back surface and as the case may be the local refractive index of the spectacle lens in the respective visual beam path are modified by the evaluation points until a termination criterion is met.

Viewing direction

In the context of the present invention, the term "viewing direction" describes the direction of the line of sight when viewing an object. The viewing direction moves downwards and nasal-wards when the view chances from viewing a distant object to viewing a near object. On the other hand, the viewing direction moves upwards and temporal-wards when the view chances from viewing a near object to viewing a distant object.

Whole width of a spectacle lens design

In the context of the present invention, the term "whole width of a spectacle lens design" refers to the extension of the spectacle lens design from its nasal rim to its temporal rim.

According to the invention, a spectacle lens design for a spectacle lens to be positioned relative to the eye of a wearer according to a given as-worn position is provided.

The spectacle lens design includes:

- A clear distance zone. The clear distance zone may be a zone which has a distance focal power. The distance focal power may provide a focused image on the fovea for a distant object when a spectacle lens manufactured according to the spectacle lens design is positioned according to the as-worn position. The distance focal power may, in particular, be a zero or minus power. Within the distance zone a so-called fitting point is located. According to sec. 3.2.34 of DIN ISO 13666:2019 the fitting point is a point on the front surface (3.2.13) of a lens (3.5.2) or blank (3.8.1) stipulated by the manufacturer for positioning the lens in front of the eye.

- A clear near zone. The clear near zone may be a zone which has a near focal power. The near focal power may provide a focused image on the fovea for a near object when a spectacle lens manufactured according to the spectacle lens design is positioned according to the as-worn position. The near focal power may, in particular, be a zero, plus or minus power. The near focal power and the distance focal power may be equal. Within the near zone a so-called near reference point is located. According to sec. 3.2.21 of DIN ISO 13666:2019 the near reference point is a point on the front surface (3.2.13) of the lens (3.5.2) at which the verification power (3.10.15) for the near zone corresponding to the near portion according to 3.15.3 applies.

- An intermediate zone located between the clear distance zone and the clear near zone. The intermediate zone is located such between the clear distance zone and the clear near zone that, when a spectacle lens manufactured according to the spectacle lens design is positioned according to the as-worn position, the line of sight moves through the intermediate zone when the viewing direction changes from viewing through clear distance zone to viewing through the clear near zone or vice versa. The intermediate zone includes at least one of the following: focusing structures providing a focal power higher than the distance focal power and the near focal power or diffusing structures leading to a diffusion of light passing the intermediate zone. The intermediate zone may exclusively include focusing structures. The focal power of the focusing structures may result in a myopic defocus when a spectacle lens manufactured according to the spectacle lens design is positioned according to the as-worn position. Moreover, the focal power provided by the focusing structures may, in particular be at least 0.5 dpt higher than the distance focal power and the near focal power.

According to a first alternative aspect of the invention, at least one of the clear distance zone and the clear near zone extends over the whole width of the spectacle lens design, i.e. from the nasal rim of the spectacle lens design to its temporal rim.

The inventive spectacle lens design leads to spectacle lenses that are comfortable for a wearer because at least one of the clear distance zone and the clear near zone has a large width so that the spectacle lens does not appear dirty over the horizontal field of view in central vision when viewing through the respective zone. As the horizontal field of view is larger than the vertical field of view it is more important for the comfort that the spectacle lens does not appear dirty in the horizontal field of view than that is does not appear dirty in the vertical field of view. At the same time, the intermediate zone is effective in at least retarding myopia progression due to the diffuse peripheral vision or the peripheral myopic defocus it provides.

The positioning of the intermediate zone with the focusing structures or the diffusing structures between the clear distance zone ant the clear near zone has the effect that the wearers are forced to use the spectacle lens in the as worn position in a manner the respective spectacle lens is constructed for, namely to view through the clear distance zone for viewing far distanced objects and to view through the clear near zone for viewing objects located nearby because otherwise the respective objects will be seen with reduced contrast, i.e. diffuse or blurred. The wearer is prevented from looking through the intermediate zone.

In addition, when looking through one of the clear distance zone and the clear near zone the foveal image is sharp, while simultaneously light from the object travels through the adjacent intermediate zone where it is myopically defocused or diffused and hits the periphery of the retina of the wearer's eye producing a blurred or diffuse image thereon. Such diffuse or myopically defocused image on the periphery of the retina is reported to slow down myopia progression by Neitz et al. (see e.g. WO 2010/075319 A2, WO 2018/026697 A1 and WO 2019/152438 A1) on one hand as well as Earl Smith III et al. (see e.g. WO 2005/055891 A1 and WO 2007/092853 A2) and To et al. (see e.g. WO 2006/034652 A1) on the other hand.

According to a second alternative aspect of the invention, at least one of the clear distance zone and the clear near zone is delimited in vertical direction by the intermediate zone and an additional zone that is disconnected from the intermediate zone and includes at least one of the following: focusing structures providing a focal power higher than the distance focal power and the near focal power diffusing structures leading to a diffusion of light passing the additional zone. The focal power higher of the additional zone may be at least 0.5 dpt higher than the distance focal power. Moreover, the near focal power may result in a myopic defocus when a spectacle lens manufactured according to the spectacle lens design is positioned according to the as-worn position. In particular, the additional zone may exclusively include focusing structures. Moreover, at least one of the clear distance zone and the clear near zone may extend over the whole width of the spectacle lens design, i.e. from the nasal rim of the spectacle lens design to its temporal rim.

By means of the additional zone, the portion of the peripheral visual field in which the vision is diffuse or in which a myopic defocus is present can be increased which may help to increase effectiveness in at least retarding myopia progression without leading to an appearance of dirtiness in the horizontal field of view of central vision.

A distance between said intermediate zone and said additional zone on a vertical line through a near reference point is preferably between 4 and 6 mm. In other words, the vertical expansion of said clear near zone along said predefined line through said near reference point is preferably between 4 mm and 6 mm. This measure provides clear central foveal vision when reading but either blur or myopic defocus in the periphery of the retina surrounding the fovea.

According to a third alternative aspect of the invention, the horizontal extension of the intermediate zone is given by the horizontal distance between the viewing direction when viewing to a faraway object and the viewing direction when viewing to a near object, and/or the vertical extension of the intermediate zone is given by the vertical distance between the viewing direction when viewing to a faraway object and the viewing direction when viewing to a near object. At least one of the clear distance zone and the clear near zone may extend over the whole width of the spectacle lens design, i.e. from the nasal rim of the spectacle lens design to its temporal rim. In particular, at least one of the clear distance zone and the clear near zone may extend over the whole width of the spectacle lens design, i.e. from the nasal rim of the spectacle lens design to its temporal rim.

By having a horizontal extension of the intermediate zone that is given by the horizontal distance between the viewing direction when viewing to a faraway object and the viewing direction when viewing to a near object the horizontal extension of the intermediate zone is minimized without losing its effect in slowing down progression of myopia. Minimizing the horizontal extension of the intermediate zone, in turn, reduces the impression of the spectacle lens being dirty in the horizontal periphery. On the other hand, by having a vertical extension of the intermediate zone that is given by the vertical distance between the viewing direction when viewing to a faraway object and the viewing direction when viewing to a near object the effect of the intermediate zone in slowing down progression of myopia is maximized without impairing clear vision through the clear distance zone and the clear near zone.

According to a fourth alternative aspect a lower limit of the vertical extension of the intermediate zone on a vertical line through a near reference point is between 2 and 4 mm, preferably between 2 and 3 mm, above the near reference point. Alternatively or in addition, according to said fourth alternative aspect, an upper limit of the vertical extension of the intermediate zone on a vertical line through a fitting point is between 3 and 8 mm below the fitting point, preferably between 5 and 8 mm below the fitting point. Both measures allow for a clear central foveal vision when looking at infinite objects or when reading while, at the same time, either retinal peripheral blur or peripheral myopic defocus is provided.

The spectacle lens design according to all alternative aspects of the invention may be implemented in form of a physical spectacle lens. However, the spectacle lens design according to the invention may as well be implemented as virtual spectacle lens, i.e. the spectacle lens design according to the invention may be present in form of data describing the spectacle lens design. Such data may be stored on a data carrier or as a downloadable data signal. In the data, the properties of the spectacle lens design may not only be present as geometrical and material data but also as data required for production of such spectacle lenses.

In the spectacle lens design according to all alternative aspects of the invention both the clear distance zone and the clear near zone may extend over the whole width of the spectacle lens design, which enhances the comfort for a wearer of a spectacle lens manufactured according to the spectacle lens design further. In particular, the clear distance zone may match the whole distance portion of a multifocal spectacle lens such as a progressive spectacle lens design. In addition, or as an alternative, the clear near zone may match the whole near portion of a progressive spectacle lens design or of any other multifocal spectacle lens design.

Like the clear distance zone and/or the clear near zone, the intermediate zone may extend over the whole width of the spectacle lens design in all alternative aspects of the invention. This eliminates paths along which the line of sight could move around the intermediate zone when the viewing direction changes from viewing through clear distance zone to viewing through the clear near zone or vice versa. At the same time, the larger width of the intermediate zone leads to a larger portion of the peripheral visual field in which vision is diffuse or in which a myopic defocus is present, which may in turn lead to an increased effectiveness in at least retarding myopia progression.

In the inventive spectacle lens design according to the first alternative aspect of the invention and according to the third alternative aspect of the invention, at least one of the clear distance zone and the clear near zone may be delimited in vertical direction by the intermediate zone and an additional zone that includes at least one of the following: focusing structures providing a focal power higher than the focal power of the clear distance zone and the focal power of the clear near zone or diffusing structures leading to a diffusion of light passing the additional zone. The additional zone may exclusively include focusing structures. The focal power of the focusing structures in the additional zone may result in a myopic defocus when a spectacle lens manufactured according to the spectacle lens design is positioned according to the as-worn position. Moreover, the focal power provided by the focusing structures may, in particular be at least 0.5 dpt higher than the distance focal power and the near focal power. By this measure, the portion of the peripheral visual field in which the vision is diffuse or in which a myopic defocus is present can be increased which may help to increase effectiveness in at least retarding myopia progression without leading to an appearance of dirtiness in the horizontal field of view of central vision.

In a special embodiment of the inventive spectacle lens design according the first alternative aspect of the invention, the clear near zone is fully surrounded by the intermediate zone. This embodiment provides for a large portion of the peripheral visual field in which the vision is diffuse or in which a myopic defocus is present when the wearer views through the clear near zone, which may be particularly effective in at least retarding myopia progression.

According to all alternative aspects of the invention, the inventive spectacle lens design may be implemented in form of a physical spectacle lens (physical representation of the spectacle lens design) with the features mentioned above or by a data set that is a numerical representation of the spectacle lens design.

Furthermore, a spectacle lens kit is provided. The inventive spectacle lens kit comprises a spectacle lens design according to any of the alternative aspects of the invention and instructions including the as-worn position of the spectacle lens. The spectacle design may be comprised in the spectacle lens kit as a numerical representation of the spectacle lens design, i.e. data describing a spectacle lens design or data containing computer-readable instructions for controlling one or more manufacturing machines in order to produce a spectacle lens according to the spectacle lens design. As an alternative, the spectacle design may be comprised in the spectacle lens kit as a physical representation of the spectacle lens design, i.e. a physical spectacle lens.

The spectacle lens design of the inventive spectacle lens kit is comfortable for a wearer because at least one of the clear distance zone and the clear near zone has a large width so that the spectacle lens does not appear dirty over the horizontal field of view in central vision when viewing through the respective zone. As the horizontal field of view is larger than the vertical field of view it is more important for the comfort that the spectacle lens does not appear dirty in the horizontal field of view than that is does not appear dirty in the vertical field of view. At the same time, the intermediate zone is effective in at least retarding myopia progression due to the diffuse peripheral vision or the peripheral myopic defocus it provides.

In the spectacle lens design of the spectacle lens kit both the clear distance zone and the clear near zone may extend over the whole width of the spectacle lens design. This enhances the comfort for a wearer of a spectacle lens further. In particular, the clear distance zone may match the whole distance portion of a multifocal spectacle lens such as a progressive spectacle lens. In addition, or as an alternative, the clear near zone may match the whole near portion of a progressive spectacle lens or of any other multifocal spectacle lens.

In the spectacle lens design of the spectacle lens kit the intermediate zone may extend over the whole width of the spectacle lens. This eliminates paths along which the line of sight could move around the intermediate zone when the viewing direction changes from viewing through clear distance zone to viewing through the clear near zone or vice versa. At the same time, the larger width of the intermediate zone leads to a larger portion of the peripheral visual field in which vision is diffuse or in which a myopic defocus is present which may lead to an increased effectiveness in at least retarding myopia progression.

In the spectacle lens design of the spectacle lens kit at least one of the clear distance zone and the clear near zone may be delimited in vertical direction by the intermediate zone and an additional zone that includes focusing structures providing a focal power higher than the distance focal power and the near focal power or diffusing structures leading to a diffusion of light passing the additional zone. The additional zone may exclusively include focusing structures. The focal power of the focusing structures in the additional zone may result in a myopic defocus when a spectacle lens manufactured according to the spectacle lens design is positioned according to the as-worn position. Moreover, the focal power provided by the focusing structures may, in particular be at least 0.5 dpt higher than the distance focal power and the near focal power. By this measure, the portion of the peripheral visual field in which the vision is diffuse or in which a myopic defocus is present may be increased which may help to increase effectiveness in at least retarding myopia progression without adding an appearance of dirtiness in the horizontal field of view of central vision.

In the spectacle lens design of the spectacle lens kit the clear near zone may be fully surrounded by the intermediate zone. This provides for a large portion of the peripheral visual field in which the vision is diffuse or in which a myopic defocus is present when the wearer views through the clear near zone, which may be particularly effective in at least retarding myopia progression.

Furthermore, a data set comprising at least one kind of the following kinds of data: data describing a spectacle lens according to the spectacle lens design and data containing computer-readable instructions for controlling one or more manufacturing machines in order to produce a spectacle lens according to the inventive spectacle lens design is provided. The data set may comprise data describing a spectacle lens according to one or more of the further developments of the inventive spectacle lens design or data containing computer-readable instructions for controlling one or more manufacturing machines in order to produce a spectacle lens according to one or more of the further developments of the inventive spectacle lens design.

According to the invention, also a data set comprising at least one kind of the following kinds of data is provided: Data describing a spectacle lens according to the inventive spectacle lens design and data containing computer-readable instructions for controlling one or more manufacturing machines in order to produce a spectacle lens according to the inventive spectacle lens design.

According to the invention, also a computer-implemented method of designing a spectacle lens to be positioned relative to the eye of a wearer according to a given as-worn position is provided. The method includes the steps of:

- Providing a numerical representation of a spectacle lens with a clear distance zone having a distance focal power and a clear near zone having a near focal power. The distance focal power may provide a focused image on the fovea for a distant object when a spectacle lens manufactured according to the spectacle lens design is positioned according to the as-worn position, The distance focal power may, in particular, be a zero or minus power. The near focal power may provide a focused image on the fovea for a near object when a spectacle lens manufactured according to the spectacle lens design is positioned according to the as-worn position. The near focal power may, in particular, be a zero, plus or minus power. The near focal power and the distance focal power may be equal.

- Designing in said numerical representation of a spectacle lens an intermediate zone located between the clear distance zone and the clear near zone such that, when the spectacle lens is positioned according to the as-worn position, the line of sight passes the intermediate zone when the viewing direction changes from viewing through clear distance zone to viewing through the clear near zone or vice versa, where the intermediate zone includes at least one of the following: focusing structures providing a focal power higher than the distance focal power and the near focal power or diffusing structures leading to a diffusion of light passing the intermediate zone. The intermediate zone may exclusively include focusing structures. The focal power of the focusing structures may result in a myopic defocus when a spectacle lens manufactured according to the spectacle lens design is positioned according to the as-worn position. Moreover, the focal power provided by the focusing structures may, in particular be at least 0.5 dpt higher than the distance focal power and the near focal power.

According to the first alternative aspect of the invention, said numerical representation of a spectacle lens is designed such that at least one of the clear distance zone and the clear near zone extends over the whole width of said numerical representation of a spectacle lens spectacle lens, i.e. from the nasal rim of the spectacle lens to the temporal rim.

Spectacle lenses designed according to the first alternative aspect of the inventive computer-implemented method are comfortable for a wearer because at least one of the clear distance zone and the clear near zone has a large width so that the spectacle lenses do not appear dirty over the horizontal field of view in central vision when viewing through the respective zone. As the horizontal field of view is larger than the vertical field of view it is more important for the comfort that the spectacle lens does not appear dirty in the horizontal field of view than that the spectacle lens does not appear dirty in the vertical field of view. At the same time, the intermediate zone of the spectacle lens designed according to the inventive method is effective in at least retarding myopia progression due to the diffuse peripheral vision or the peripheral myopic defocus it provides.

According to the second alternative aspect of the inventive computer-implemented method, at least one additional zone is designed in said numerical representation of a spectacle lens such that is disconnected from the intermediate zone and includes at least one of the following: focusing structures providing a focal power higher than the distance focal power and the near focal power or diffusing structures leading to a diffusion of light passing the additional zone. The intermediate zone and the at least one additional zone are designed such in said spectacle lens relative to the clear distance zone and the clear near zone that at least one of the clear distance zone and the clear near zone is delimited in vertical direction by the intermediate zone and the at least one additional zone. The additional zone may be designed to exclusively include focusing structures. The focal power of the focusing structures in the additional zone may be designed such as to result in a myopic defocus when a spectacle lens manufactured according to the spectacle lens design is positioned according to the as-worn position. Moreover, the focal power provided by the focusing structures may, in particular, be at least 0.5 dpt higher than the distance focal power and the near focal power.

By means of the additional zone, the portion of the peripheral visual field in which the vision is diffuse or in which a myopic defocus is present can be increased which may help to increase effectiveness in at least retarding myopia progression without leading to an appearance of dirtiness in the horizontal field of view of central vision.

In the second alternative aspect of the inventive computer-implemented method, the numerical representation of the spectacle lens may, in particular, be designed such that at least one of the clear distance zone and the clear near zone extends over the whole width of the spectacle lens design.

According to the third alternative aspect of the inventive computer-implemented method, the intermediate zone is designed such in said numerical representation of a spectacle lens that the horizontal extension of the intermediate zone is given by the horizontal distance between the viewing direction when viewing to a faraway object and the viewing direction when viewing to a near object, and/or the vertical extension of the intermediate zone is given by the vertical distance between the viewing direction when viewing to a faraway object and the viewing direction when viewing to a near object.

By having a horizontal extension of the intermediate zone that is given by the horizontal distance between the viewing direction when viewing to a faraway object and the viewing direction when viewing to a near object the horizontal extension of the intermediate zone is minimized without losing its effect in slowing down progression of myopia. Minimizing the horizontal extension of the intermediate zone, in turn, reduces the impression of the spectacle lens being dirty in the horizontal periphery. On the other hand, by having a vertical extension of the intermediate zone that is given by the vertical distance between the viewing direction when viewing to a faraway object and the viewing direction when viewing to a near object the effect of the intermediate zone in slowing down progression of myopia is maximized without impairing clear vision through the clear distance zone and the clear near zone.

In the third alternative aspect of the inventive computer-implemented method, the numerical representation of the spectacle lens may, in particular, designed such that at least one of the clear distance zone and the clear near zone extends over the whole width of the spectacle lens design.

According to all aspects of the inventive computer-implemented method, the said spectacle lens may be designed such that both the clear distance zone and the clear near zone extend over the whole width of the spectacle lens. This enhances the comfort for a wearer of a spectacle lens further. In particular, the intermediate zone may be designed such that the clear distance zone matches the whole distance portion of a multifocal spectacle lens such as a progressive spectacle lens. In addition, or as an alternative, the intermediate zone may be designed such that the clear near zone matches the whole near portion of w progressive spectacle lens or any other multifocal spectacle lens.

According to all aspects of the inventive computer-implemented method, the intermediate zone may be designed such in said spectacle lens that it extends over the whole width of the spectacle lens. This eliminates paths in the spectacle lens along which the line of sight could move around the intermediate zone when the viewing direction changes from viewing through clear distance zone to viewing through the clear near zone or vice versa. At the same time, the larger width of the intermediate zone leads to a larger portion of the peripheral visual field in which vision is diffuse or in which a myopic defocus is present which may lead to an increased effectiveness in at least retarding myopia progression.

According to the fist and the third alternative aspects of the inventive computer-implemented method, at least one additional zone that at least includes focusing structures providing a focal power higher the distance focal power and the near focal power or diffusing structures leading to a diffusion of light passing the additional zone may designed. Then, the intermediate zone and the at least one additional zone are then designed such in said spectacle lens that at least one of the clear distance zone and the clear near zone is delimited in vertical direction by the intermediate zone and the additional zone. By this measure, the portion of the peripheral visual field in which the vision is diffuse or in which a myopic defocus is present may be increased which hay help to increase effectiveness in at least retarding myopia progression without leading to an appearance of dirtiness in the horizontal field of view of central vision. The additional zone may be formed such that it exclusively includes focusing structures. The focusing structures may be designed to provide a focal power that results in a myopic defocus when the spectacle lens is positioned according to the as-worn position. Moreover, focusing structures may, in particular, be formed such as to provide a focal power that is at least 0.5 dpt higher than the distance focal power and the near focal power.

According to the fourth alternative aspect of the inventive computer-implemented method, a lower limit of the vertical extension of the intermediate zone on a vertical line through a near reference point is between 2 and 4 mm, preferably between 2 and 3 mm, above the near reference point. Alternatively or in addition, according to said fourth alternative aspect, an upper limit of the vertical extension of the intermediate zone on a vertical line through a fitting point is between 3 and 8 mm below the fitting point, preferably between 5 and 8 mm below the fitting point. Both measures allow for a clear central foveal vision when looking at infinite objects or when reading while, at the same time, either retinal peripheral blur or peripheral myopic defocus is provided.

According to the fist alternative aspect of the inventive computer-implemented method, the intermediate zone may be designed such that the clear near zone is fully surrounded by the intermediate zone. This provides for a large portion of the peripheral visual field in which the vision is diffuse or in which a myopic defocus is present when the wearer views through the clear near zone, which may be particularly effective in at least retarding myopia progression.

According to the invention, also a method of manufacturing a spectacle lens to be positioned relative to the eye of a wearer according to a given as-worn position is provided. The method includes the steps of:

- Providing a spectacle lens with a clear distance zone having a distance focal power and a clear near zone having a near focal power. The distance focal power may provide a focused image on the fovea for a distant object when a spectacle lens manufactured according to the spectacle lens design is positioned according to the as-worn position, The distance focal power may, in particular, be a zero or minus power. The near focal power may provide a focused image on the fovea for a near object when a spectacle lens manufactured according to the spectacle lens design is positioned according to the as-worn position. The near focal power may, in particular, be a zero, plus or minus power. The near focal power and the distance focal power may be equal.

- Forming in said spectacle lens an intermediate zone located between the clear distance zone and the clear near zone such that, when the spectacle lens is positioned according to the as-worn position, the line of sight passes the intermediate zone when the viewing direction changes from viewing through clear distance zone to viewing through the clear near zone or vice versa. The intermediate zone formed in the spectacle lens includes at least one of the following: focusing structures providing a focal power higher than the distance focal power and the near focal power or diffusing structures leading to a diffusion of light passing the intermediate zone. The intermediate zone may exclusively include focusing structures. The focal power of the focusing structures may result in a myopic defocus when a spectacle lens manufactured according to the spectacle lens design is positioned according to the as-worn position. Moreover, the focal power provided by the focusing structures may, in particular be at least 0.5 dpt higher than the distance focal power and the near focal power.

According to the first alternative aspect of the invention, said spectacle lens is formed such that at least one of the clear distance zone and the clear near zone extends over the whole width of the spectacle lens, i.e. from the nasal rim of the spectacle lens to the temporal rim.

The spectacle lens manufactured according to the first alternative aspect of the inventive method is comfortable for a wearer because at least one of the clear distance zone and the clear near zone has a large width so that the spectacle lens does not appear dirty in central vision over the whole horizontal field of view when viewing through the respective zone. As the horizontal field of view is larger than the vertical field of view it is more important for the comfort that the spectacle lens does not appear dirty in the horizontal field of view than that is does not appear dirty in the vertical field of view. At the same time, the intermediate zone of the spectacle lens manufactured according to the inventive method is effective in at least retarding myopia progression due to the diffuse peripheral vision or the peripheral myopic defocus it provides.

According to the second alternative aspect of the inventive method, at least one additional zone is formed in said spectacle lens such that it is disconnected from the intermediate zone and includes at least one of the following: focusing structures providing a focal power higher than the distance focal power and the near focal power or diffusing structures leading to a diffusion of light passing the additional zone. The intermediate zone and the at least one additional zone are formed such in said spectacle lens relative to the clear distance zone and the clear near zone that at least one of the clear distance zone and the clear near zone is delimited in vertical direction by the intermediate zone and the at least one additional zone. The additional zone may be formed to exclusively include focusing structures. The focal power of the focusing structures formed in the additional zone may result in a myopic defocus when the spectacle lens is positioned according to the as-worn position. Moreover, the focal power provided by the focusing structures may, in particular, be at least 0.5 dpt higher than the distance focal power and the near focal power.

By means of the additional zone, the portion of the peripheral visual field in which the vision is diffuse or in which a myopic defocus is present can be increased which may help to increase effectiveness in at least retarding myopia progression without leading to an appearance of dirtiness in the horizontal field of view of central vision.

In the second alternative aspect of the inventive method, the spectacle lens may, in particular, be formed such that at least one of the clear distance zone and the clear near zone extends over the whole width of the spectacle lens design.

According to the third alternative aspect of the inventive method, the intermediate zone is formed such in said numerical representation of a spectacle lens that the horizontal extension of the intermediate zone is given by the horizontal distance between the viewing direction when viewing to a faraway object and the viewing direction when viewing to a near object, and/or the vertical extension of the intermediate zone is given by the vertical distance between the viewing direction when viewing to a faraway object and the viewing direction when viewing to a near object.

By having a horizontal extension of the intermediate zone that is given by the horizontal distance between the viewing direction when viewing to a faraway object and the viewing direction when viewing to a near object the horizontal extension of the intermediate zone is minimized without losing its effect in slowing down progression of myopia. Minimizing the horizontal extension of the intermediate zone, in turn, reduces the impression of the spectacle lens being dirty in the horizontal periphery. On the other hand, by having a vertical extension of the intermediate zone that is given by the vertical distance between the viewing direction when viewing to a faraway object and the viewing direction when viewing to a near object the effect of the intermediate zone in slowing down progression of myopia is maximized without impairing clear vision through the clear distance zone and the clear near zone.

In the third alternative aspect of the inventive method, the numerical representation of the spectacle lens may, in particular, designed such that at least one of the clear distance zone and the clear near zone extends over the whole width of the spectacle lens design.

According to all alternative aspects of the inventive method, the spectacle lens may be formed such that both the clear distance zone and the clear near zone extend over the whole width of the spectacle lens. This enhances the comfort for a wearer of a spectacle lens further. In particular, the intermediate zone may be formed such that the clear distance zone matches the whole distance portion of the multifocal spectacle lens such as a progressive spectacle lens. In addition, or as an alternative, the intermediate zone may be formed such that the clear near zone matches the whole near portion of a progressive spectacle lens or any other multifocal spectacle lens.

According to all alternative aspects of the inventive method, the intermediate zone may be formed such in said spectacle lens that it extends over the whole width of the spectacle lens. This eliminates paths in the spectacle lens along which the line of sight could move around the intermediate zone when the viewing direction changes from viewing through clear distance zone to viewing through the clear near zone or vice versa. At the same time, the larger width of the intermediate zone leads to a larger portion of the peripheral visual field in which vision is diffuse or in which a myopic defocus is present which may lead to an increased effectiveness in at least retarding myopia progression.

According to the first and third alternative aspects of the inventive method, at least one additional zone that includes at least one of the following: focusing structures providing a focal power higher the distance focal power and the near focal power or diffusing structures leading to a diffusion of light passing the additional zone may be formed. Then, the intermediate zone and the at least one additional zone are formed such in said spectacle lens that at least one of the clear distance zone and the clear near zone is delimited in vertical direction by the intermediate zone and the additional zone. By this measure, the portion of the peripheral visual field in which the vision is diffuse or in which a myopic defocus is present may be increased which may help to increase effectiveness in at least retarding myopia progression without leading to an appearance of dirtiness in the horizontal field of view of central vision. The additional zone may be formed such that it exclusively includes focusing structures. The focusing structures may be designed to provide a focal power that results in a myopic defocus when the spectacle lens is positioned according to the as-worn position. Moreover, focusing structures may, in particular, be formed such as to provide a focal power that is at least 0.5 dpt higher than the distance focal power and the near focal power.

According to the first alternative aspect of the inventive method, the intermediate zone may be formed such in said spectacle lens that the clear near zone is fully surrounded by the intermediate zone. This provides for a large portion of the peripheral visual field in which the vision is diffuse or in which a myopic defocus is present when the wearer views through the clear near zone, which may be particularly effective in at least retarding myopia progression.

Further features, properties and advantages will become clear from the following description of embodiments of the invention in conjunction with the accompanying drawings.

Figure 1    shows a first exemplary embodiment of a spectacle with a clear distance zone, a clear near zone, and an intermediate zone between the clear distance zone and the clear near zone.

Figure 2    shows a second exemplary embodiment of a spectacle with a clear distance zone, a clear near zone, and an intermediate zone between the clear distance zone and the clear near zone with an eye viewing through the clear distance zone.

Figure 3    shows the second exemplary embodiment with an eye viewing through the clear near zone.

Figure 4    shows a third exemplary embodiment of a spectacle with a clear distance zone, a clear near zone, and an intermediate zone between the clear distance zone and the clear near zone.

Figure 5    shows a fourth exemplary embodiment of a spectacle with a clear distance zone, a clear near zone, and an intermediate zone between the clear distance zone and the clear near zone.

Figure 6    shows a fifth exemplary embodiment of a spectacle with a clear distance zone, a clear near zone, and an intermediate zone between the clear distance zone and the clear near zone.

Figure 7    shows a sixth exemplary embodiment of a spectacle with a clear distance zone, a clear near zone, and an intermediate zone between the clear distance zone and the clear near zone.

Figure 8 shows a seventh exemplary embodiment of a spectacle with a clear distance zone, a clear near zone, and an intermediate zone between the clear distance zone and the clear near zone.

Figure 9 shows a eighth exemplary embodiment of a spectacle with a clear distance zone, a clear near zone, and an intermediate zone between the clear distance zone and the clear near zone.

Figure 10 shows a ninths exemplary embodiment of a spectacle with a clear distance zone, a clear near zone, and an intermediate zone between the clear distance zone and the clear near zone.

Figure 11 shows a tenth exemplary embodiment of a spectacle with a clear distance zone, a clear near zone, and an intermediate zone between the clear distance zone and the clear near zone.

Figure 12 shows a flow chart representing an exemplary embodiment for a method of manufacturing a spectacle lens.

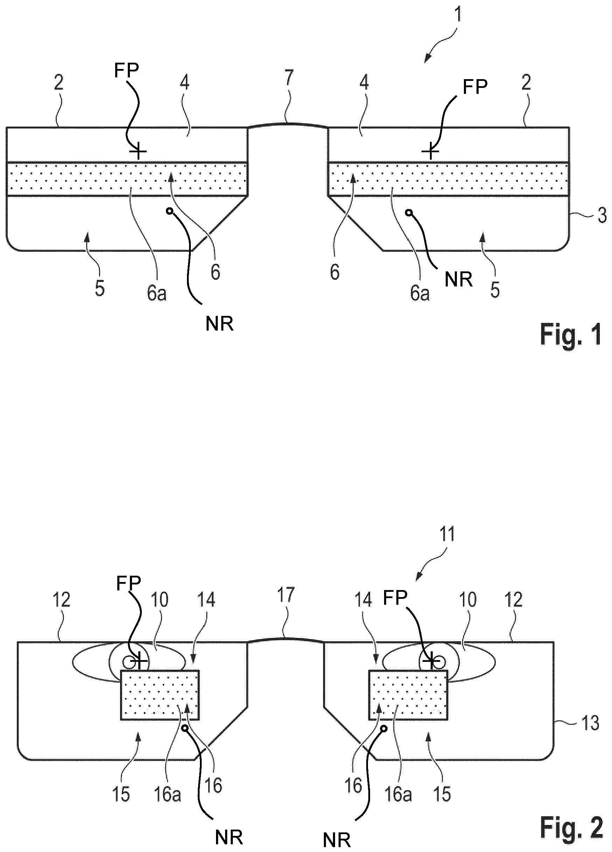

Exemplary embodiments of spectacle lenses based on the inventive lens design will be described with respect to figures 1 to 11. The spectacle lenses of the exemplary embodiments each include a clear distance zone and a clear near zone with an intermediate zone between them. The intermediate zine is positioned such between the clear distance zone and the clear near zone that the line of sight moves through the intermediate zone when the viewing direction changes from viewing through clear distance zone (when viewing objects being located far away from the wearer) to viewing through the clear near zone (such as for example when reading a book or the text on a tablet computer display) or vice versa when the spectacle lens is positioned according to its as-worn position.

In the exemplary embodiments the clear distance zone is designed such that a clear image is focused to the foveal region of the retina of the wearer's eye if the wearer looks through the clear distance zone to an object located in infinity, and the clear near zone is designed such that a clear image is focused to the foveal region of the retina of the wearer's eye if the wearer looks through the clear near zone e.g. to a book or the like when reading. The intermediate zone includes focusing structures providing a focal power resulting in a myopic defocus when a spectacle lens manufactured according to the spectacle lens design is positioned according to the as-worn position or diffusing structures leading to a diffusion of light passing the intermediate zone.

The myopic defocusing properties of the intermediate zone may be achieved by structures such as bump and inclusions of different refractive material as they are disclosed in WO 2010/075319 A2, such as island shaped areas as disclosed in US 2017/131567 A1, such as micro-lenses or micro-prisms as disclosed in WO 2016/168746 A1, or such as contiguous micro-lenses as disclosed in EP 3 553 594 A1, EP 3 561 578 A1, WO 2019/166653 A1, WO 2019/166654 A1, WO 2019/166655 A1, WO 2019/166657 A1, WO 2019/166659 A1 and WO 2019/206569 A1. However, not only circular or elliptical-shaped structures may provide myopic de-focusing optical properties but also elongated, e.g. linear or undulating, (concentric) ring- or elliptically-shaped or Fresnel-like peripheral de-focusing structures may be suitable.

Diffusers being suitable intermediate zones according to https://en.wikipedia.org/wiki/Diffuser_(optics) downloaded on March 22, 2020 may be any material that diffuses or scatters light in some manner to transmit soft light. There is a plurality of diffusors known in the prior art. The above citation states that compact diffusers may use translucent material, including ground glass, teflon, holographs, opal glass, and greyed glass. A diffractive diffuser/homogenizer is a kind of diffractive optical element (DOE) that exploits the principles of diffraction and refraction. It uses diffraction to manipulate monochromatic light, giving it a specific spatial configuration and intensity profile. Earl L. Smith III et al. discloses in "Peripheral Vision Can Influence Eye Growth and Refractive Development in Infant Monkeys" Invest Ophthalmol Vis Sci. 2005 November; 46(11): 3965-3972 the use of binocular diffuser spectacle lenses having diffusers made of frosted plastic. Guillermo M. Pérez et al. discloses in "Optical Characterization of Bangerter Foils" IOVS, January 2010, Vol. 51, No. 1, pp. 609-613 the effect of diffusing Bangerter foils applied to spectacle lenses. Neitz et al. disclose in WO 2010/075319 A2 (a) bumps on a surface of the ophthalmic lens; (b) depressions on the surface of the ophthalmic lens; (c) translucent inclusions in a material of the ophthalmic lens; and (d) transparent inclusions in the material of the ophthalmic lens, the transparent inclusions having a refractive index different from that of the material of the ophthalmic lens; all acting as diffusers. In WO 2012/097213 A2 Neitz et al. in addition disclose coatings or films applied to one or both surfaces of spectacle lenses that produce blur by diffraction scatter or diffusion. In particular, also a holographic diffuser may be applied to the lens surface. According to WO 2018/026697 A1 to Neitz et al. a dot pattern distributed across each spectacle lens, the dot pattern comprising an array of dots, each dot being at least one of (a) to (d) according to WO 2010/075319 A2 above or (e.g. inkjet printed) protrusions, spaced apart by a distance of 1 mm or less, each dot having a maximum dimension of 0.3 mm or less. Based on Neitz et al.'s principle WO 2019/152438 A1 discloses a plurality of spaced apart scattering centers (e.g., on a spectacle lens surface and/or embedded in the spectacle lens material) sized and shaped to scatter incident light, the scattering centers being arranged in a pattern that includes a random variation in spacing between adjacent dots and/or a random variation in dot size. WO 2020/014613 A1 also discloses spectacle lenses which contain light scattering features (e, light scattering dots on a lens surface and/or light scattering inclusions in the bulk of the lens). But not only dot-shaped structures may provide diffusing optical properties but also elongated, e.g. linear or undulating structures may be suitable.

Please note that both focusing structures and diffusing structures could be present in the intermediate zone. For example, the focusing structures and the diffusing structures may be present in different portions of the intermediate zone, or diffusing structures such as scattering centers may be present between focusing structures such as micro-lenses.

In all exemplary embodiments, at least one of the clear distance zone and the clear near zone may extends over the whole width of the spectacle lens design while in some exemplary embodiment both the clear distance zone and the clear near zone may extend over the whole width of the spectacle lens design. Moreover, in some exemplary embodiments the intermediate zone may extend also over the whole width of the spectacle lens design.

In one exemplary embodiment, the clear near zone does not extend over the whole width of the spectacle lens design. In this exemplary embodiment, the intermediate zone fully surrounds the clear near zone.

In some exemplary embodiments, at least one of the clear distance zone and the clear near zone may be delimited in vertical direction by the intermediate zone and an additional zone. This additional zone includes at least one of the following: focusing structures providing a focal power resulting in a myopic defocus when a spectacle lens manufactured according to the spectacle lens design is positioned according to the as-worn position or diffusing structures leading to a diffusion of light passing the additional zone.

For emmetrope persons the clear distance zone and clear near zone may have zero power. Some persons may require astigmatic and/or prismatic correction, which may be equal for both, the clear distance zone and the clear near zone. The case may be, that some person may require spherical and/or astigmatic (and respective axis) and/or prismatic (and respective base) correction being equal for both, clear distance zone and clear near zone. Presbyopic persons may require an addition power per se. Spherical and/or astigmatic (and respective axis) and/or prismatic (and respective base) correction and/or addition power may have been prescribed and may be the result of a respective refraction, namely a subjective and/or an objective refraction.

In particular, for a myopic wearer minus power correction, i.e. full-correction or some under-correction as e.g. explained in detail on p. 3, l. 3-8 of WO 2007/092853 A2, is prescribed for distance vision to enable the person to clearly view distant or far away objects. However, this person does not require a minus power correction for viewing objects being located close to the eye. No or even a plus power "correction" (for accommodation assistance or support) would be more suitable for viewing closely spaced objects.

Providing different power for the clear distance zone and the clear near zone means use of multifocal spectacle lenses such as bifocal spectacle lenses or progressive spectacle lenses. Preferably, the front surface of such spectacle lenses is spherical, while the back surface is formed for providing the required correction (of the clear distance and near zones) as well as the diffusing and/or myopic defocusing properties of the intermediate zone.

One of the clear distance zone and the clear near zone may have a circular shape as it is, for example, disclosed in WO 2010/075319 A2, WO 2018/026697 A1 and WO 2019/152438 A1 as well as in US 2017/131567 A1 and EP 3 553 594 A1, EP 3 561 578 A1, WO 2019/166653 A1, WO 2019/166654 A1, WO 2019/166655 A1, WO 2019/166657 A1, WO 2019/166659 A1 and WO 2019/206569 A1, respectively. However, in particular for reading purposes it may be advantageous if the horizontal expansion of the clear near zone exceeds the vertical expansion of the clear near zone.

The vertical expansion of the clear near zone is preferably more than 4 mm, more preferably more than 5 mm and still more preferably more than 6 mm. The vertical expansion of the clear distance zone is preferably more than 4 mm, more preferably more than 5 mm and still more preferably more than 6 mm. The horizontal expansion of the clear near zone of the near portion is preferably more than 4 mm, more preferably more than 5 mm and still more preferably more than 6 mm. The horizontal expansion of the clear distance zone is preferably more than 4 mm, more preferably more than 5 mm and still more preferably more than 6 mm. In case the horizontal expansion of the clear zone exceeds the vertical expansion of the clear near zone the difference is preferably more than 4 mm, more preferably more than 5 mm and still more preferably more than 6 mm. However, at least one of the clear distance zone and the clear near zone extends over the whole width of the spectacle lens design.

A part of the area of the surface/surfaces or the complete surface/surfaces comprising the focusing and diffusing structures may be coated as usual with respective functional coatings such as hard coatings, anti-reflective coatings, clean-coatings, anti-fog-coatings, anti-static coatings, anti-bacterial coatings, anti-viral-coatings, etc..

In the exemplary embodiments shown in Figures 1 to 10, a lower limit of the vertical extension of the intermediate zone on a vertical line through a near reference point is at least one of

a) 2 to 4 mm above the near reference point (NR)

b) 2 to 3 mm above the near reference point (NR)

and/or

an upper limit of the vertical extension of the intermediate zone on a vertical line through a fitting point (FP) is at least one of

a) 3 to 8 mm below the fitting point FP)

b) 5 to 8 mm below the fitting point (FP).

A first exemplary embodiment of the inventive spectacle lens design is shown in figure 1. This figure shows spectacles 1 with spectacle lenses 2 manufactured according to the first exemplary embodiment of inventive spectacle lens design in a plan view. The spectacle lenses 2 can be regarded as representative for the spectacle lens design of the first exemplary embodiment.

The spectacles 1 comprise two spectacle lenses 2 for the right and left eye of the spectacle wearer. The two spectacle lenses 2 are mounted in a spectacle frame 3 and separated by the bridge 7 of the spectacle frame 3. Each of the spectacle lenses 2 comprises a clear distance zone 4 for viewing distant objects, i.e. objects that have a distance of 2 m up to infinity, and a clear near zone 5 for near object, i.e. objects with a distance of 0.8 m or less, e.g., for reading purposes. These clear zones allow for achieving, assisted by accommodation, a focused image on the fovea. In each spectacle lens 2, an intermediate zone 6 is located between the clear distance zone 4 and the clear near zone 5. In the present embodiment, these intermediate zones 6 are designed such as to provide scattering optical properties so that they can be regarded as diffuser.

In the present exemplary embodiment, the distance focal power and the near focal power of each spectacle lens 2 of the spectacles 1 are equal. Therefore, from an optical point of view the spectacle lenses 2 may be regarded as single vision spectacle lenses. Since the clear distance zone 4 and the clear near zone 5 are separated by the intermediate zone 6 the spectacle lenses 2 are may be regarded as pseudo-bifocal spectacle lenses 2.

In a first variant of spectacle lens design according to the first exemplary embodiment, the clear distance zone 4 and the clear near zone 5 provide zero correction. However, in an alternative variant of spectacle lens design according to the first exemplary embodiment, the clear distance and near zones 4, 5 of the spectacle lenses 2 provide full correction for the myopic wearer when worn according to the specified as-worn position. In this case, the spectacle lenses 2 are minus lenses. The latter requires a refraction measurement of the myopic spectacle wearer's eyes for determining full correction. In addition to the aforementioned myopic visual deficiencies, the spectacle wearer's eyes may comprise additional deficiencies being revealed by the refraction measurement and requiring astigmatic and/or prismatic correction.

In the present exemplary embodiment, the intermediate zone 6 provides scattering optical properties, i.e. it acts as diffuser. The intermediate zone 6 separates the clear distance zone 4 from the clear near zone 5. The intermediate zone 6 of the present exemplary embodiment is stripe-shaped, extends in horizontal direction in the as-worn position and comprises a plurality of dot-shaped scattering centers 6a as diffusing structures. The entirety of the dot-shaped scattering centers 6a provides for the diffusion effect. Examples of such dot-shaped scattering centers 6a, namely small bumps or depressions, translucent inclusions, or transparent inclusions with a refractive index different from that of the spectacle lens material are, e.g., disclosed in US 10,302,962 B2. However, also other features suitable for reducing the contrast of the images observed by the wearer of the glasses 2 may be used as well for providing the diffusion effect.

The dot-shaped scattering centers 6a may not only be incorporated into the bulk material of the spectacle lenses 2 but also applied thereto or sandwiched in between as filters and/or as contrast reducing coatings comprising such inclusions, bumps, and/or depressions. Other examples for dot-shaped scattering centers, namely dots which can have a maximum dimension of 0.2 mm or less, e.g. 0.1 mm or less. 0.05 mm or less, 0.02 mm or less, 0.01 mm or less, are disclosed in US 2019/0033619 A1. In one variant of the present exemplary embodiment, all the dots 6a may have substantially the same size. Alternatively, the size of the dots 6a may vary randomly or regularly, e.g. in linear or radial direction. There may be an increase or decrease of dot size in linear or radial direction. There may be a subsequent, in particular also a repeated, decrease or increase of dot size along such direction. The dots may be spaced apart by 0.8 mm or less, e.g., 0.6 mm or less, 0.5 mm or less, 0.4 mm or less, 0.35 mm or less. The dots 6a may be arranged on a square grid, a hexagonal grid, another grid, in a semi-random or random pattern. They 6a may be spaced at regular intervals, e.g. such as 0.55 mm, 0.365 mm or 0.24 mm. Alternatively, dot spacing may vary randomly or regularly such as in a linear or radial direction. For example, dot spacing may increase and subsequently decrease monotonically in one direction. In order to avoid disturbing diffractive optical properties of the pattern of the intermediate zone 6 comprising of a plurality of dot-shaped scattering centers 6a the intermediate zone 6 of the present exemplary embodiment has a plurality of spaced apart scattering centers 6a sized and shaped to scatter incident light, the scattering centers being arranged in a pattern that includes an irregular variation in spacing between adjacent scattering centers and/or an irregular variation in scattering centers size as e.g. proposed in US 2019/0235279 A1.

In the present exemplary embodiment, the intermediate zone 6 extends from nasal to temporal rim of each spectacle lens 2. Nevertheless, it is not inevitably required that the intermediate zone 6 fully extends from the nasal to temporal rim of each of the spectacle lenses 2 of the spectacles 1.

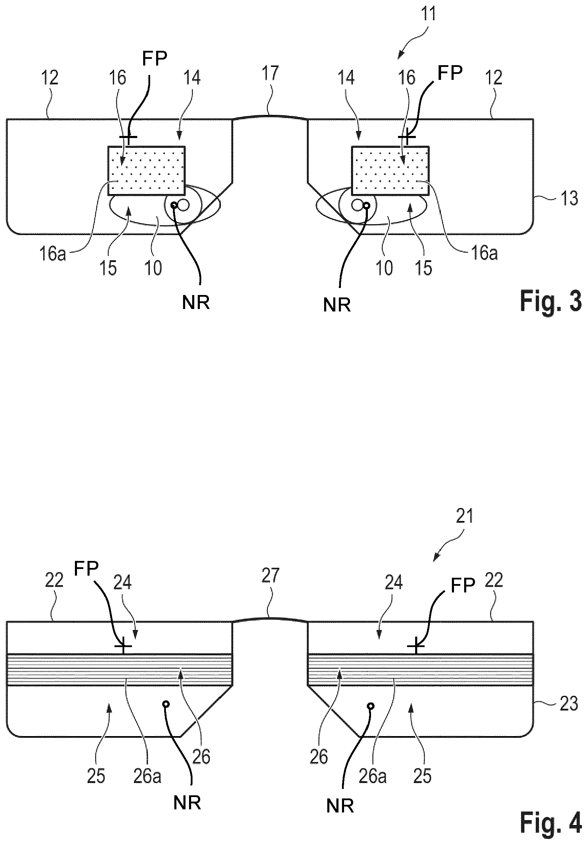

A second exemplary embodiment, in which the intermediate zone 16 does not extend from the nasal rim of the spectacle lens 12 to temporal rim of the spectacle lens 12 is shown in figures 2 and 3. These figures show spectacles 11 with spectacle lenses 12 manufactured according to the second exemplary embodiment of inventive spectacle lens design in a plan view. The spectacle lenses 12 can be regarded as representative for the spectacle lens design of the second exemplary embodiment.

The spectacles 11 comprise two spectacle lenses 12 for the right and left eye of the spectacle wearer. The two spectacle lenses 12 are mounted in a spectacle frame 13 and separated by the bridge 17 of the spectacle frame 13. Each of the spectacle lenses 12 comprises a clear distance zone 14 for viewing distant objects and a clear near zone 15 for, e.g., reading purposes. These clear zones allow for achieving, assisted by accommodation, a focused image on the fovea. In each spectacle lens 12, an intermediate zone 16 is located between the clear distance zone 14 and the clear near zone 15. Like in the first exemplary embodiment, the intermediate zones 16 are designed such as to provide scattering optical properties so that they can be regarded as diffuser.

Although the intermediate zones 16 do not need to fully extend from the nasal to temporal rim of each of the spectacle lenses 12 of the spectacles 11 there is a minimum horizontal extension $D_{min}$ and a maximum vertical extension $d_{max}$ of the intermediate zone 16. Based on figures 2 and 3 deriving the minimum horizontal extension $D_{min}$ and the maximum vertical extension $d_{max}$ of a horizontally oriented rectangular shaped intermediate zone 16 will be explained.

Figure 2 shows the eyes 10 of the spectacle wearer when viewing through the respective clear distance zones 14 of the spectacle lenses 12 to infinity while figure 3 shows the eyes 10 of the spectacle wearer when viewing through the respective clear near zones 15 of the spectacle lenses 12, e.g. when reading a book. The horizontal and vertical extensions of the intermediate zone 16 are determined by the straight ahead viewing directions of the eyes 10 when viewing to a faraway object, i.e. an object that can be regarded as being located at infinity, and to a nearby object, i.e. an object at a reading distance, respectively. In particular, the horizontal and vertical extensions of the intermediate zone 16 may be determined by the point of a spectacle lens manufactured according to the respective spectacle lens design where the straight ahead viewing directions of the eyes 10 when viewing to a faraway object and to a nearby object intersect the rear surface of said spectacle lens, where the viewing directions are represented by the lines of sight when viewing to the faraway object and to the nearby object, respectively. The orientations of these lines of sight may be determined during the process of designing the spectacle by means of the object distance model for which the spectacle lens design is optimized. With the knowledge of the orientations of these lines of sight the points where the lines of sight intersect the rear surface of said spectacle lens can be determined on the basis of the as-worn position for which the spectacle lens designed.

The vertical distance between the viewing direction when viewing to a faraway object and the viewing direction when viewing to a near object represents the maximum vertical extension $d_{max}$ of the intermediate zone 16. The horizontal distance between the viewing direction when viewing to a faraway object and the viewing direction when viewing to a near object represents the minimum horizontal extension $D_{min}$ of the intermediate zone 16. In the present exemplary embodiment, the horizontal extension and a vertical extension of the intermediate zone 16 are chosen to be the minimum horizontal extension $D_{min}$ and the maximum vertical extension $d_{max}$, respectively. In other respects than for the extension of the intermediate zone 16 the spectacle lenses 12 of the second exemplary embodiment correspond to the spectacle lenses 2 of the first exemplary embodiment.

With the horizontal extension of the intermediate zone 16 being the minimum horizontal extension the line of sight still moves through the intermediate zone when the viewing direction changes from viewing through clear distance zone to viewing through the clear near zone or vice versa. Hence, in the present exemplary embodiment the horizontal extension of the intermediate zone is minimized without losing its effect in slowing down progression of myopia. Minimizing the horizontal extension of the intermediate zone 16 reduces the impression of the spectacle lens being dirty in the horizontal periphery. On the other hand, with the vertical extension of the intermediate zone 16 being the maximum vertical extension $d_{max}$ of the intermediate zone 16 the effect of the intermediate zone in slowing down progression of myopia is maximized without impairing clear vision through the clear distance zone and the clear near zone.

A third exemplary embodiment of the inventive spectacle lens design is shown in figure 4. This figure shows spectacles 21 with spectacle lenses 22 manufactured according to the third exemplary embodiment of inventive spectacle lens design in a plan view. The spectacle lenses 22 can be regarded as representative for the spectacle lens design of the third exemplary embodiment.

The spectacles 21 according to the present exemplary embodiment comprise two spectacle lenses 22 for the right and left eye of the wearer of the spectacles. The two spectacle lenses 22 are mounted in a spectacle frame 23 and are separated by the bridge 27 of the spectacle frame 23. Each of the spectacle lenses 22 comprises a clear zone 24 for viewing distant objects and a clear near zone 25 for viewing objects being close to the eyes, e.g. for reading purposes. These clear zones 24, 25 allow for achieving, assisted by accommodation, a focused image on the fovea. In each spectacle lens 22, an intermediate zone 26 is located between the clear distance zone 24 and the clear near zone 25. In the present embodiment, these intermediate zones 26 are designed such as to provide scattering optical properties so that they can be regarded as diffuser.

In the present exemplary embodiment, the distance focal power and the near focal power of each spectacle lens 22 of the spectacles 21 are identical. Therefore, from an optical point of view the spectacle lenses 22 can be regarded as single vision lenses. Since the clear zones 24 and 25 providing clear vision are separated by the intermediate zone 26 the spectacle lenses 22 may be called pseudo-bifocal spectacle lenses 22.

The intermediate zone 26 provides scattering optical properties so that it acts as a diffuser. It is stripe-shaped, extends in horizontal direction in the as-worn position from the nasal rim of the spectacle lens to the temporal rim, and comprises a plurality of stripe-shaped scattering centers 26a as diffusing structures. These stripe-shaped scattering centers 26a also run in a horizontal direction although this is not mandatory in the context of the present exemplary embodiment.

The stripe-shaped scattering centers provide undirected arbitrary deflection of incoming light not resulting in a predetermined focus or in a plurality of predetermined foci but providing contrast reduction to the wearer as compared to viewing through the respective clear distance and near zones 24, 25.

In a first variant of the present exemplary embodiment, the clear distance and near zones 24, 25 provide zero correction. In a second variant of the present exemplary embodiment, the clear distance and near zones 24, 25 of the spectacle lenses 22 provide full correction for the myopic wearer. In this case the spectacle lenses 22 are minus lenses. In a third variant of the present exemplary embodiment, the respective distance focal powers of the clear distance zones 24 of the spectacle lenses 22 provide full correction of the myopic wearer. This means that the distance portions 44 provide minus focal power. In this variant, the near focal power of the clear near zones 25 of each spectacle lens 22 does not provide any correction. This means that the near focal powers of the clear near zones 25 of each spectacle lens 22 may be zero. Therefore, from an optical point of view the spectacle lenses 42 are bifocal lenses.

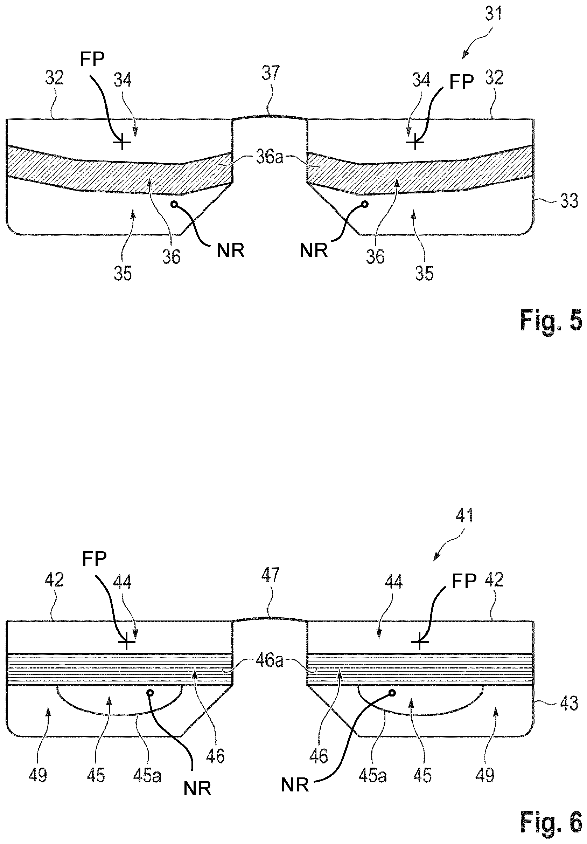

A fourth exemplary embodiment of the inventive spectacle lens design is shown in figure 5. This figure shows spectacles 31 with spectacle lenses 32 manufactured according to the fourth exemplary embodiment of inventive spectacle lens design in a plan view. The spectacle lenses 32 can be regarded as representative for the spectacle lens design of the fourth exemplary embodiment.

The spectacles 31 according to the fourth exemplary embodiment comprise two spectacle lenses 32 for the right and left eyes of the wearer of the spectacles 31. The two spectacle lenses 32 are arranged in a spectacle frame 33 and separated by the bridge 37 of the spectacle frame 33. Each of the spectacle lenses 32 comprises a clear distance zone for viewing distant objects and a clear near zone 35 for viewing objects being close to the eyes e.g. for reading purposes. These clear zones 34, 35 allow for achieving, assisted by accommodation, a focused image on the fovea. In each spectacle lens 32, an intermediate zone 36 is located between the clear distance zone 34 and the clear near zone 35. In the present embodiment, these intermediate zones 36 are designed such as to provide scattering optical properties so that they can be regarded as diffuser.

In the present exemplary embodiment, the distance focal power and the near focal power of each spectacle lens 32 of the spectacles 31 are the same.

Therefore, from an optical point of view the spectacle lenses 32 are single vision lenses. Since the clear distance and near zones 34 and 36 providing clear vision are separated by the intermediate zone 36, the spectacle lenses 22 may be called pseudo-bifocal spectacle lenses 32.

The intermediate zone 36 of the present exemplary embodiment is stripe-shaped and runs in a direction that is in general horizontal in the as-worn position. It has a curvature following the contour of the line of puncture points on the spectacle lens 32 of rays coming from the pupil of the eye of the wearer penetrating the clear near zone 35 of the spectacle lens 32 and hitting a piece of paper or a book when the wearer is reading a row of letters.

The intermediate zone 36 comprises a plurality of stripe-shaped scattering centers 36a as diffusing structures. In the present exemplary embodiment, the stripe-shaped scattering centers 26a run parallel to each other but are inclined with respect to the horizontal direction. The stripe-shaped scattering centers 36a provide undirected arbitrary deflection of incoming light from the viewed object not resulting in a predetermined focus or in a plurality of predetermined foci but providing a contrast reduced image to the periphery of the retina of the wearer's eyes as compared to the foveal image of the eye when viewing through the respective distance and near clear zones 34, 35, respectively.

In an alternative variant of the present exemplary embodiment, instead of providing zero correction the clear distance and near zones 34, 35 of the spectacle lenses 2 provide full correction for the myopic wearer. In a further alternative variant of the present exemplary embodiment, the distance and near portions provide non-zero under-correction for the myopic wearer. In the latter two cases the spectacle lenses are minus lenses.

A fifth exemplary embodiment of the inventive spectacle lens design is shown in figure 6. This figure shows spectacles 41 with spectacle lenses 42 manufactured according to the fifth exemplary embodiment of inventive spectacle lens design in a plan view. The spectacle lenses 42 can be regarded as representative for the spectacle lens design of the fifth exemplary embodiment.

The spectacles 41 according to present exemplary embodiment comprise two spectacle lenses 42 for the right and left eyes of the wearer of the spectacles 41. A spectacle frame 43 carries the two spectacle lenses 42 being spaced and are separated by the bridge 47 of the spectacle frame 43. Each of the spectacle lenses 42 comprises a clear distance zone 44 for viewing distant objects and a clear near zone 45 for viewing near objects, e.g. for reading purposes. These clear zones 44, 45 allow for achieving, assisted by accommodation, a focused image on the fovea. In each spectacle lens 42, an intermediate zone 46 is located between the clear distance zone 44 and the clear near zone 45. In the present embodiment, these intermediate zones 46 are designed such as to provide scattering optical properties so that they can be regarded as diffuser

In the present exemplary embodiment, the respective distance focal powers of the clear distance zones 44 of the spectacle lenses 42 provide full correction of the myopic spectacles wearer. This means that the clear distance zones 44 provide minus focal power. The near focal power of the clear near zones 45 of each spectacle lens 42 of the spectacles 41 provides plus focal power. The plus focal power may be adjusted to the wearer such that no accommodation of his eyes is required when reading, i.e. for viewing objects in reading distance. Hence, the spectacle lenses 42 of the present exemplary embodiment are bifocal lenses. Bifocal segments 45 present in a lower section 49 of the respective spectacle lens 42 provide for the plus focal power and form the clear near zones. Those parts of the lower sections 49 of the spectacle lenses 42 in which neither the bifocal segments nor the intermediate zones 46 are present do not belong to the clear near zone 45

In the present exemplary embodiment, the intermediate zone 46 provides scattering optical properties, is stripe-shaped and runs in horizontal direction in the as worn position. It comprises, as diffusing structures, a plurality of stripe-shaped scattering centers 46a which also run in a horizontal direction. These stripe-shaped scattering centers provide undirected arbitrary deflection of incoming light not resulting in a predetermined focus or in a plurality of predetermined foci but providing contrast reduction to the wearer as compared to viewing through the respective clear distance and near zones 44, 45.

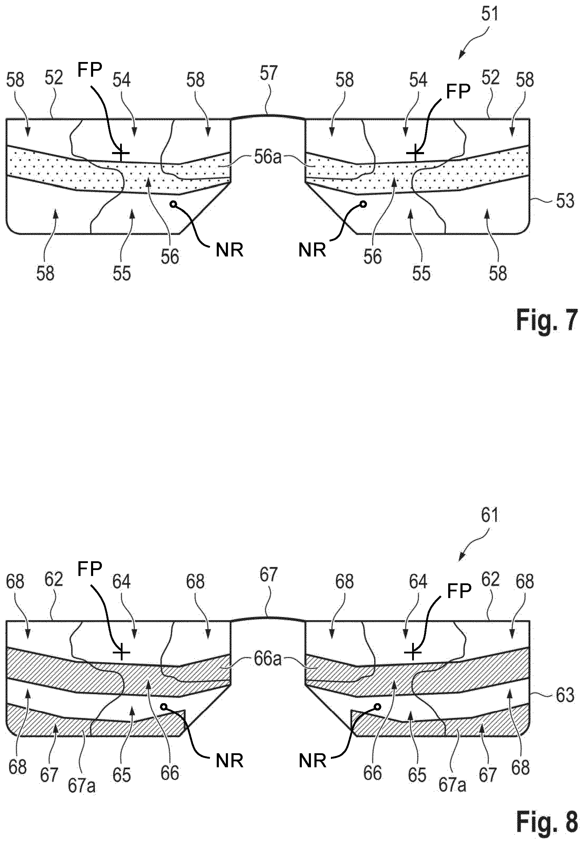

A sixth exemplary embodiment of the inventive spectacle lens design is shown in figure 7. This figure shows spectacles 51 with spectacle lenses 52 manufactured according to the sixth exemplary embodiment of inventive spectacle lens design in a plan view. The spectacle lenses 52 can be regarded as representative for the spectacle lens design of the sixth exemplary embodiment.

The spectacles 51 according the sixth exemplary embodiment comprise two progressive spectacle lenses 52 for the right and left eyes of the wearer of the spectacles 51. The two spectacle lenses 52 are mounted in a spectacle frame 53 and separated by the bridge 57 of the spectacle frame 53. Each of the spectacle lenses 52 comprises a clear distance zone 54 for viewing distant objects and a clear near zone 55 for viewing objects being close to the eyes e.g. for reading purposes. In the as-worn position, the clear distance zone 54 and the clear near zone 55 are delimited in horizontal direction by a surrounding peripheral zone 58 in which a residual astigmatic error exceeds a given limit and are connected to each other via a progression channel.

In the present exemplary embodiment, the distance focal power of each spectacle lens 52 of the spectacles 51 provides for full correction according to wearer's prescription. The near focal power of each spectacle lens 52 of the spectacles 51 comprises an add power, i.e. a positive focal power added to the distance focal power.

In the present exemplary embodiment, a stripe-shaped intermediate zone 56 that provides scattering optical properties extends over the progression channel and over parts of the peripheral zone 58. This intermediate zone 56 can be regarded as a diffuser. It separates the distance clear zone 54 from the near clear zone 55, runs in a generally horizontal direction in the as worn position and has a curvature that follows the contour of the line of points on the spectacle lens 52 of rays coming from the pupil of the eye of the wearer through the clear near zone 55 of the spectacle lens 52 to a piece of paper or a book when reading a row of letters. The intermediate zone 56 comprises, diffusing structures, a plurality of dot-shaped scattering centers 56a which provide undirected arbitrary deflection of incoming light not resulting in a predetermined focus or in a plurality of predetermined foci but providing contrast reduction to the wearer as compared to viewing through the respective distance and near clear zones 54, 55.

A seventh exemplary embodiment of the inventive spectacle lens design is shown in figure 8. This figure shows spectacles 61 with spectacle lenses 62 manufactured according to the seventh exemplary embodiment of inventive spectacle lens design in a plan view. The spectacle lenses 62 can be regarded as representative for the spectacle lens design of the seventh exemplary embodiment.

The spectacles 61 of the seventh exemplary embodiment distinguish from those according to sixth exemplary embodiment in that the scattering centers 76a are stripe-shaped instead of dot-shaped and in that an additional zone 67 with scattering centers is present at the lower rim of the spectacle lens 62. Therefore, the clear near zone 66 is, in the as-worn position, delimited in vertical direction by the intermediate zone 66 and the additional zone 67. In all other respects, the spectacles 61 of the seventh exemplary embodiment correspond to the spectacles 51 of the sixth exemplary embodiment.

The distance between said intermediate zone 66 and said additional zone 67 on a vertical line through a near reference point NR is between 4 and 6 mm.

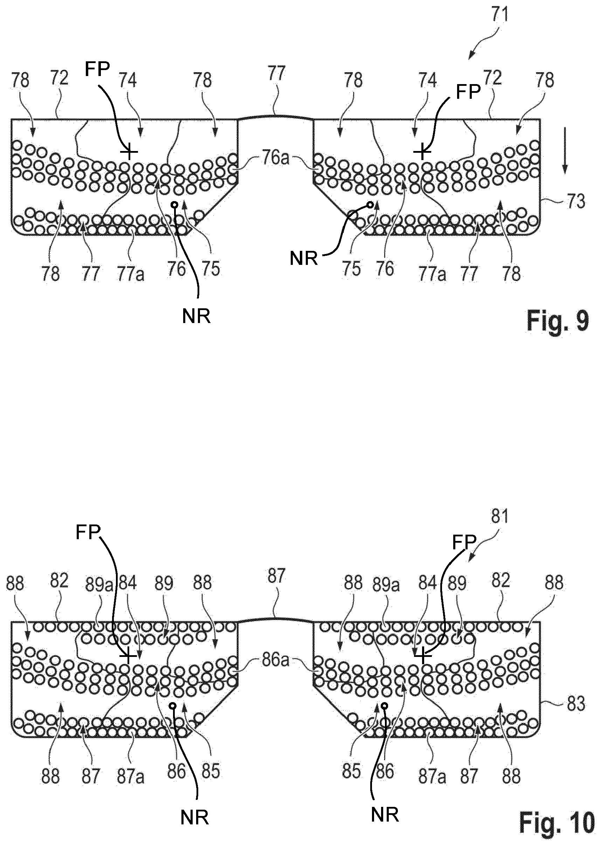

An eighth exemplary embodiment of the inventive spectacle lens design is shown in figure 9. This figure shows spectacles 71 with spectacle lenses 72 manufactured according to the eighth exemplary embodiment of inventive spectacle lens design in a plan view. The spectacle lenses 72 can be regarded as representative for the spectacle lens design of the eighth exemplary embodiment.

The spectacles 71 according to the eighth exemplary embodiment comprise two progressive spectacle lenses 72 for the right and left eyes of the wearer of the spectacles 71. The two spectacle lenses 72 are mounted in a spectacle frame 73 and separated by the bridge 77 of the spectacle frame 73. Each of the spectacle lenses 72 comprises a clear distance zone 74 for viewing distant objects and a clear near zone 75 for viewing objects being close to the eyes e.g. for reading purposes. In the as-worn position, the clear distance zone 74 and the clear near zone 75 are delimited by a surrounding peripheral zone 78 in which a residual astigmatic error exceeds a given limit and are connected to each other via a progression channel.

In the present exemplary embodiment, the distance focal power of each spectacle lens 72 of the spectacles 71 provides for full correction according to wearer's prescription. The near focal power of each spectacle lens 72 of the spectacles 71 comprises an addition power.

In the present exemplary embodiment, an intermediate zone 76 that provides a myopic defocus in the periphery of the retina for the wearer, i.e. peripheral myopic defocus, extends over the progression channel and over parts of the peripheral zone 78. This intermediate zone 76 separates the clear distance zone 74 from the clear near zone 75, is stripe-shaped and runs in a generally horizontal direction in the as worn position. Moreover, the intermediate zone 76 is curved with a curvature following the contour of the line of points on the spectacle lens 72 of rays coming from the pupil of the eye of the wearer through the clear near zone 75 of the spectacle lens 72 to a piece of paper or a book when reading a row of letters. The peripheral myopic defocus is provided a plurality of micro-lenses 76a distributed over the intermediate zone 76 which act as focusing structures with a higher focal power than the focal power clear distance zone 74 and the focal power of the clear near zone 75. In the present exemplary embodiment, each of the plurality of micro-lenses 76a has the same focal power.

The spectacle lenses 72 of the present exemplary embodiment each also comprise an additional zone 77 with a plurality of micro-lenses 77a. This additional zone 77, which like the intermediate zone 76 provides a peripheral myopic defocus, is present at the lower rim of the spectacle lens 72 so that the clear near zone 76 is, in the as-worn position, delimited in vertical direction by the intermediate zone 76 and the additional zone 77 which both provide a myopic defocus.

In an alternative variant of the spectacle lens according to the eighth exemplary embodiment, the focal power of the micro-lenses 76a in the intermediate zone 76 increases from top to bottom of the zone (with the spectacle lens 72 being oriented in its as-worn position). The direction in which the focal power of the micro-lenses increases is indicated by the arrow in the right side of the spectacles 71. In this variant, the focal power of the micro-lenses 77a in the additional zone 77 does not vary and matches the focal power of the lowermost micro-lenses 76a in the intermediate zone 76.

A ninth exemplary embodiment of the inventive spectacle lens design is shown in figure 10. This figure shows spectacles 81 with spectacle lenses 82 manufactured according to the ninth exemplary embodiment of inventive spectacle lens design in a plan view. The spectacle lenses 82 can be regarded as representative for the spectacle lens design of the ninth exemplary embodiment.

The spectacles 81 of the ninth exemplary embodiment distinguish from those according to eighth exemplary embodiment in that, in addition to the intermediate zone 86 and the additional zone 87 a further additional zone 88 is present at the upper rim of each spectacle lens. Hence, in the as-worn position, the clear near zone 85 is delimited in vertical direction by the intermediate zone 86 and the additional zone 87 while the clear distance zone 84 is delimited in vertical direction by the intermediate zone 86 and the further additional zone 89. The intermediate zone 86, the additional zone 87 and the further additional zone 89 each provide a peripheral myopic defocus, which is brought about by a plurality of micro-lenses 86a, 87a, 89a in the intermediate zone 86, the additional zone 87 and the further additional zone 89, respectively, which act as focusing structures with a higher focal power than the focal power clear distance zone 84 and the focal power of the clear near zone 85.

Like in the eighth exemplary embodiment, the focal power of the micro-lenses 86a in the intermediate zone 86 may increase from top to bottom of the zone (with the spectacle lens 82 being oriented in its as-worn position). In this variant, the focal power of the micro-lenses 87a, 89a in the additional zone 87 and the further additional tone 89 does not vary, and the focal power of the micro-lenses 87a in the additional zone 87 matches the focal power of the lowermost micro-lenses 86a in the intermediate zone 86 while the focal power of the micro-lenses 89a in the further additional zone 89 matches the focal power of the uppermost micro-lenses 86a in the intermediate zone 86.

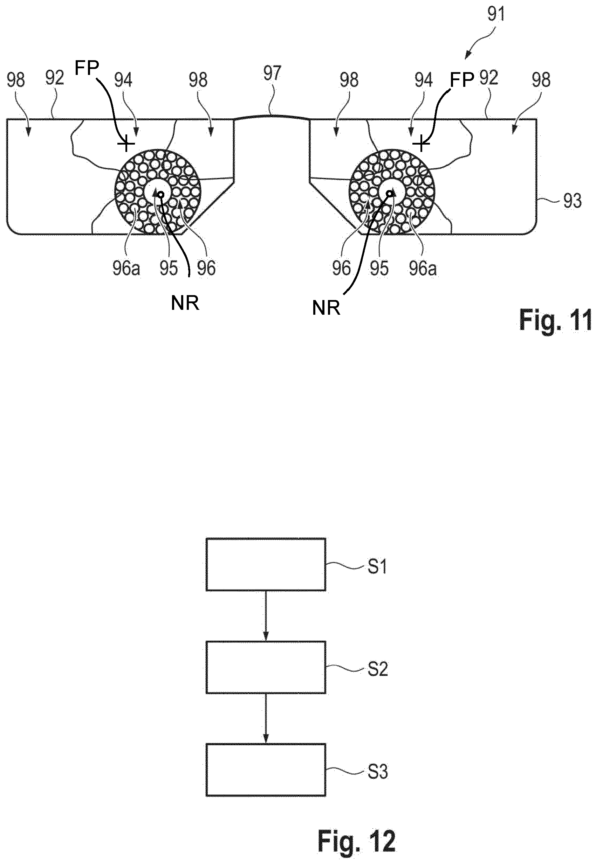

A tenth exemplary embodiment of the inventive spectacle lens design is shown in figure 11. This figure shows spectacles 91 with spectacle lenses 92 manufactured according to the tenth exemplary embodiment of inventive spectacle lens design in a plan view. The spectacle lenses 92 can be regarded as representative for the spectacle lens design of the tenth exemplary embodiment.

The spectacles 91 according to the tenth exemplary embodiment comprise two progressive spectacle lenses 92 for the right and left eyes of the wearer of the spectacles 91. The two spectacle lenses 92 are mounted in a spectacle frame 93 and separated by the bridge 97 of the spectacle frame 93. Each of the spectacle lenses 92 comprises a clear distance zone 94 for viewing distant objects and a clear near zone 95 for viewing objects being close to the eyes e.g. for reading purposes. In the as-worn position, the clear distance zone 94 is delimited in horizontal direction by a surrounding peripheral zone 98 in which a residual astigmatic error exceeds a given limit. In each spectacle lens 92, an annular intermediate zone 96 with micro-lenses 96a fully surrounds the clear near zone 95 and separates it from the clear distance zone 95. Please note that, in difference to the other progressive lenses described so far, the intermediate zone 96 not only delimits the clear near zone 95 in vertical direction but also in horizontal direction. Please note further, that although there are in the lower part of the spectacle lenses 92 zones between the annular intermediate zone 96 and the peripheral zone 98 which do not provide a myopic defocus, do not act as a diffuser and in which the residual astigmatic error does not exceed the given limit those zones are not part of the clear near zone because the wearer does typically not look through them for viewing a near object, which is typically an object with a distance in the range between 0.3 m and 0.8 m.

Next, an exemplary embodiment for a method of manufacturing the spectacle lens with an inventive lens design will be described with respect to figure 12.

In a first step, S1, data from a prescription is received where the prescription includes a summary of the dioptric powers necessary for correcting a diagnosed refractive error. In case of a myopic eye the prescription contains at least a value "sph" for sphere. In addition, in case of an additional astigmatism it may also contain values for "cyl" for cylinder and a value "axis" for the axis of the cylinder. If the spectacle lens to be manufactured is a progressive spectacle lens the prescription also includes an add power. Further values may also present in the prescription like, for example a prism value and a corresponding base value. In case the intermediate zone of the spectacle lens shall provide a peripheral myopic defocus, the prescription also contains a value for an additional power, which shall be used for providing the peripheral myopic defocus. However, in the present exemplary embodiment, the intermediate zone shall for a diffuser.

In the present exemplary embodiment, the values contained in the prescription are based on a measurement performed by an eye care professional with an ametropic person, where the measurement provides for refraction data relating to the eyes of the ametropic person. The refraction data may either be objective refraction data, i.e. refraction data measured objectively by means of a refractometer or the like, or subjective refraction data. In case of subjective refraction data, this data may be collected by letting the ametropic person look at a text or at optotypes with different sizes while trying various test lenses until the ametropic person experiences a satisfying visual acuity.

However, instead of values of a prescription it would also be possible to provide the measured data in form of other suitable values, for example in form of Zernike coefficients. In addition, it would also be possible to receive the values representing objective refraction data directly from a refractometer or from any other suitable measurement apparatus.

Based on the measured data received in step S1, a single vision spectacle or a multifocal spectacle lens such as, for example, a bifocal spectacle lens or a progressive spectacle lens, with at least one focal power that provides a focused image on the fovea (possibly assisted by accommodation) when the wearer looks trough the spectacle lens worn according to an as-worn position is produced by means of a suitable process in step S2. Suitable processes can, for example be molding processes or machining processes. If a machining process is used, the single vision lens can, for example, be manufactured from a semi-finished blank, which includes an already finished front surface. The back surface of the semi-finished blank is then machined so that the semi-finished blank becomes the single vision spectacle lens or the multifocal spectacle lens with the requested focal power(s).

In step S3 scattering centers are introduced as diffusing structures into a zone of the spectacle lens which shall become the intermediate zone. This can be done by any suitable method, for example by means of a laser generating point-shaped or line-shaped depressions in the back surface of the spectacle lens or by means of a doping process. The scattering centers are introduced such into the spectacle lens that the intermediate zone at least partly surrounds a zone without scattering centers. Hence, the zone without scattering centers allows for clear vision with the focal power that provides a focused image on the fovea.

In case the intermediate zone shall comprise focusing structures instead of scattering centers where the focusing structures provide a peripheral myopic defocus when the wearer looks through the clear distance zone or the clear near zone, an alternative step S3 is used. In this alternative step S3, a mold is set on the back surface of the spectacle lens where the molding surface of the mold represents the negative shape of the focusing structures to be manufactured. With the mold set on the back surface of the spectacle lens the focusing structures are formed on the back surface by injection molding or any other suitable molding process. After the molding process, a polishing process for removing any ridges remaining from the molding process may follow. However, applying the focusing structures to the back surface of the spectacle lens does not need to be done by means of a molding process. Other processes, such as, for example, swelling processes like oleic acid swelling or additive manufacturing processes like inkjet printing, may also be used. Although in the present exemplary embodiment the focusing structures are formed on the back surface, they may as well be formed on the front surface of the spectacle lens.

After the forming the intermediate zone in step S3, i.e. after providing the diffusing structures or the focusing structures the spectacle lens is finished.

The concepts of the present invention have been described with respect to exemplary embodiments thereof for illustrating the invention. However, a person skilled in the art realizes that the concepts of the present invention can be implemented by variants of the exemplary embodiments. For example, number and shape of the focusing structures may differ from those described in the exemplary embodiments. Moreover, a person skilled in the art can envisage other manufacturing techniques for providing the focusing structures. For example, instead of forming the focusing structures on the front or back surface of the spectacle lens it would also be possible to provide zones in the spectacle lens which have a refractive index that differs from the refractive index of the rest of the spectacle lens. Providing such zones can for example be done by a doping process. As a consequence, the focusing structures would be present in the spectacle lens rather than on a surface of the spectacle lens. Therefore, the present invention shall not be limited by the exemplary embodiments but only by the appended claims.

**Claims**

1. A spectacle lens (2, 12, 22, 32, 42, 52, 62, 72, 82, 92) including:

   - a clear distance zone (4, 14, 24, 34, 44, 54, 64, 74, 84, 94) having a distance focal power,
   - a clear near zone (5, 15, 25, 35, 45, 55, 65, 75, 85, 95) having a near focal power, and
   - an intermediate zone (6, 16, 26, 36, 46, 56, 66, 76, 86, 96) located between the clear distance zone (4, 14, 24, 34, 44, 54, 64, 74, 84, 94) and the clear near zone (5, 15, 25, 35, 45, 55, 65, 75, 85, 95) where the intermediate zone (6, 16, 26, 36, 46, 56, 66, 76, 86, 96) includes at least one of the following: focusing structures (76a, 86a, 96a) providing a focal power higher than the distance focal power and the near focal power or diffusing structures (6a, 16a, 26a, 36a, 46a, 56a, 66a) leading to a diffusion of light passing the intermediate zone (6, 16, 26, 36, 46, 56, 66, 76, 86, 96);

   **characterized in that**

   a lower limit of the vertical extension of the intermediate zone (16) on a vertical line through a near reference point (NR) is set such with respect to the near reference point (NR) that the intermediate zone (16) is at least one of

   a) 2 to 4 mm above the near reference point (NR)
   b) 2 to 3 mm above the near reference point (NR)

   and/or
   an upper limit of the vertical extension of the intermediate zone (16) on a vertical line through a fitting point (FP) is set such with respect to the fitting point that the intermediate zone (16) is at least one of

   a) 3 to 8 mm below the fitting point (FP)
   b) 5 to 8 mm below the fitting point (FP),

   the near reference point (NR) being according to section 3.2.21 of DIN ISO 13666:2019 a point on a front surface (3.2.13) of the lens (3.5.2) at which a verification power (3.10.15) for the near zone corresponding to a near portion (3.15.3) applies,
   the fitting point being according to section 3.2.34 of DIN ISO 13666:2019 a point on a front surface (3.2.13) of the lens (3.5.2) stipulated by a manufacturer for positioning the lens in front of an eye.

2. The spectacle lens (2, 12, 22, 32, 42, 52, 62, 72, 82, 92) ) as claimed in claim 1, **characterized in that** at least one of group selected from the clear distance zone, the clear near zone and the intermediate zone extends over a whole width of the spectacle lens.

3. A spectacle lens (2, 12, 22, 32, 42, 52, 62, 72, 82, 92) including:

   - a clear distance zone (4, 14, 24, 34, 44, 54, 64, 74, 84, 94) having a distance focal power,
   - a clear near zone (5, 15, 25, 35, 45, 55, 65, 75, 85, 95) having a near focal power different from the distance focal power of the clear distance zone (4, 14, 24, 34, 44, 54, 64, 74, 84, 94), and
   - an intermediate zone (6, 16, 26, 36, 46, 56, 66, 76, 86, 96) located between the clear distance zone (4, 14, 24, 34, 44, 54, 64, 74, 84, 94) and the clear near zone (5, 15, 25, 35, 45, 55, 65, 75, 85, 95) where the intermediate zone (6, 16, 26, 36, 46, 56, 66, 76, 86, 96) includes at least one of the following: focusing structures (76a, 86a, 96a) providing a focal power higher than the distance focal power and the near focal power or diffusing structures (6a, 16a, 26a, 36a, 46a, 56a, 66a) leading to a diffusion of light passing the intermediate zone (6, 16, 26, 36, 46, 56, 66, 76, 86, 96);

   **characterized in that**
   at least one of a group selected from the clear distance zone, the clear near zone and the intermediate zone extends over a whole width of the spectacle lens.

4. The spectacle lens (2, 12, 22, 32, 42, 52, 62, 72, 82, 92) as claimed in any of the claims 1 to 3, **characterized in that** the distance focal power is a zero or minus focal power and the near focal power is a zero or minus focal power different from the zero or minus focal power of the distance focal power.

5. The spectacle lens (2, 12, 22, 32, 42, 52, 62, 72, 82) as claimed in any of the claims 1 to 4, **characterized in that** both the clear distance zone (4, 14, 24, 34, 44, 54, 64, 74, 84) and the clear near zone (5, 15, 25, 35, 45, 55, 65, 75, 85) extend over the whole width of the spectacle lens (2, 12, 22, 32, 42, 5 52, 62, 72, 82).

6. The spectacle lens (2, 12, 22, 32, 42, 52, 62, 72, 82) as claimed in any of the claims 1 to 5, **characterized in that** the intermediate zone (6, 26, 36, 46, 56, 66, 76, 86) extends over the whole width of the spectacle lens (2, 12, 22, 32, 42, 52, 62, 72, 82).

7. The spectacle lens (62, 72, 82) as claimed in any one of the claims 1 to 6, **characterized in that** at least one of the clear distance zone (64, 74, 84) and the clear near zone (65, 75, 85) is delimited in vertical direction by the intermediate zone (66, 76, 86) and an additional zone (67, 77, 87, 89) that includes at least one of the following: focusing structures (77a, 87a, 89a) providing a focal power resulting in a myopic defocus when a spectacle lens (62, 72, 82) is positioned according to the as-worn position or diffusing structures (67a) leading to a diffusion of light passing the additional zone.

8. The spectacle lens (62, 72, 82) according to any one of the claims 1 to 7, **characterized in that** an expansion of said clear near zone (65, 75, 85) in vertical direction along a vertical line through a near reference point (NR) is between 4 and 6 mm.

9. The spectacle lens (62, 72, 82) as claimed in claim 1 or claim 3, **characterized in that** the clear near zone (95) is fully surrounded by the intermediate zone (96).

10. A spectacle lens kit comprising a spectacle lens (12), where the spectacle lens (12) includes

    - a clear distance zone (14) having a distance focal power,
    - a clear near zone (15) having a near focal power, and
    - an intermediate zone (16) located between the clear distance zone (14) and the clear near zone (15),

**characterized in that**

    - the kit comprises instructions including the as-worn position of the spectacle lens (12) and an object distance model used for designing the spectacle lens (12), where the object distance model contains the information to which object distance a viewing direction through the spectacle lens (12) corresponds,
    - where the intermediate zone (16) includes at least one of the following: focusing structures providing a focal power higher than the distance focal power and the near focal power or diffusing structures (16a) leading to a diffusion of light passing the intermediate zone (16),
    - the horizontal extension of the intermediate zone (16) is given by the horizontal distance between the viewing direction when viewing to a faraway object and the viewing direction when viewing to a near object according to the information contained in the object distance model, when the spectacle lens (12) is positioned according to the as-worn position, and
    - at least one of the clear distance zone (14), the clear near zone (15) and the intermediate zone extends over the whole width of the spectacle lens (12).

11. A data set a) stored on a computer-readable medium or b) carried by a data signal, the data set comprising at least one kind of the following kinds of data: (i) a representation of the spectacle lens kit as claimed in claim 10 comprising a representation of the spectacle lens (12) and a representation of the instructions including the as-worn position of the spectacle lens, where the representation of the spectacle lens (12) is configured to be used for a manufacture of the spectacle lens (12) and (ii) a representation of the spectacle lens kit as claimed in claim 10 comprising a representation of the spectacle lens (12) and a representation of the instructions including the as-worn position of the spectacle lens and data containing computer-readable instructions for controlling one or more manufacturing machines in order to produce the spectacle lens (12).

12. A computer-implemented method of designing a spectacle lens (12) for the purpose of a use of the design for a manufacture of the spectacle lens (12), including the steps of

    - providing a representation of a spectacle lens (12) with a clear distance zone (14) having a distance focal power and a clear near zone (15) having a near focal power,

**characterized in that**

- designing in said representation of the spectacle lens (12) an intermediate zone (16) located between the clear distance zone (14) and the clear near zone (15), where the intermediate zone (16) includes at least one of the following: focusing structures providing a focal power higher than the distance focal power and the near focal power or diffusing structures (16a) leading to a diffusion of light passing the intermediate zone (16)

- designing the intermediate zone (16) in said representation of the spectacle lens (12) comprises

- setting the horizontal extension of the intermediate zone (16) to the horizontal distance between the viewing direction when viewing to a faraway object and the viewing direction when viewing to a near object, according to the information to which object distance a viewing direction through the spectacle lens (12) corresponds contained in an object distance model, when the spectacle lens (12) is positioned according to the as-worn position, and

- designing at least one of the clear distance zone (64, 74, 84), the clear near zone (65, 75, 85) and the intermediate zone such as to extend over the whole width of the representation of the spectacle lens (62, 72, 82).

13. The computer-implemented method as claimed in claim 12, **characterized in** further designing the clear distance zone (4, 14, 24, 34, 44, 54, 64, 74, 84, 94) and the clear near zone (5, 15, 25, 35, 45, 55, 65, 75, 85, 95) in said representation of the spectacle lens (2, 12, 22, 32, 42, 52, 62, 72, 82, 92) such that the distance focal power is a zero or minus focal power and the near focal power is a zero or minus focal power.

14. A computer-implemented method of designing a spectacle lens (2, 12, 22, 32, 42, 52, 62, 72, 82, 92) for the purpose of a use of the design for a manufacture of the spectacle lens (2, 12, 22, 32, 42, 52, 62, 72, 82, 92), including the steps of

- providing a representation of a spectacle lens (2, 12, 22, 32, 42, 52, 62, 72, 82, 92) with a clear distance zone (4, 14, 24, 34, 44, 54, 64, 74, 84, 94) having a distance focal power and a clear near zone (5, 15, 25, 35, 45, 55, 65, 75, 85, 95) having a near focal power, and

- designing in said representation of the spectacle lens (2, 12, 22, 32, 42, 52, 62, 72, 82, 92) an intermediate zone (6, 16, 26, 36, 46, 56, 66, 76, 86, 96) located between the clear distance zone (4, 14, 24, 34, 44, 54, 64, 74, 84, 94) and the clear near zone (5, 15, 25, 35, 45, 55, 65, 75, 85, 95), where the intermediate zone (6, 16, 26, 36, 46, 56, 66, 76, 86, 96) includes at least one of the following: focusing structures (76a, 86a, 96a) providing a focal power higher than the distance focal power and the near focal power or diffusing structures (6a, 16a, 26a, 36a, 46a, 56a, 66a) leading to a diffusion of light passing the intermediate zone (6, 16, 26, 36, 46, 56, 66, 76, 86, 96);

**characterized in that**

designing the intermediate zone (6, 16, 26, 36, 46, 56, 66, 76, 86, 96) in said representation of the spectacle lens (2, 12, 22, 32, 42, 52, 62, 72, 82, 92) relative to the clear distance zone (4, 14, 24, 34, 44, 54, 64, 74, 84, 94) and the clear near zone (5, 15, 25, 35, 45, 55, 65, 75, 85, 95) to comprise setting a lower limit of the vertical extension of the intermediate zone (16) on a vertical line through a near reference point (NR) of at least one of

a) 2 to 4 mm above the near reference point (NR)
b) 2 to 3 mm above the near reference point (NR)

and/or
an upper limit of the vertical extension of the intermediate zone (16) on a vertical line through a fitting point (FP) of at least one of

a) 3 to 8 mm below the fitting point (FP)
b) 5 to 8 mm below the fitting point (FP),

the near reference point (NR) being according to section 3.2.21 of DIN ISO 13666:2019 a point on a front surface (3.2.13) of the lens (3.5.2) at which a verification power (3.10.15) for the near zone corresponding to a near portion (3.15.3) applies,
the fitting point being according to section 3.2.34 of DIN ISO 13666:2019 a point on a front surface (3.2.13) of the lens (3.5.2) stipulated by a manufacturer for positioning the lens in front of an eye.

15. The computer-implemented method as claimed in claim 14 **characterized in** designing at least one of group selected from the clear distance zone, the clear near zone and the intermediate zone such as to extend over a whole width of the spectacle lens,

16. A computer-implemented method of designing a spectacle lens (2, 12, 22, 32, 42, 52, 62, 72, 82, 92) for the purpose of a use of the design for a manufacture of the spectacle lens (2, 12, 22, 32, 42, 52, 62, 72, 82, 92), including the steps of

- providing a representation of a spectacle lens (2, 12, 22, 32, 42, 52, 62, 72, 82, 92) with a clear distance zone (4, 14, 24, 34, 44, 54, 64, 74, 84, 94) having a distance focal power and a clear near zone (5, 15, 25, 35, 45, 55, 65, 75, 85, 95) having a near focal power different from the distance focal power of the clear distance zone (4, 14, 24, 34, 44, 54, 64, 74, 84, 94),

**characterized in that**

- designing in said representation of the spectacle lens (2, 12, 22, 32, 42, 52, 62, 72, 82, 92) an intermediate zone 6, 16, 26, 36, 46, 56, 66, 76, 86, 96) located between the clear distance zone (4, 14, 24, 34, 44, 54, 64, 74, 84, 94) and the clear near zone (5, 15, 25, 35, 45, 55, 65, 75, 85, 95), where the intermediate zone 6, 16, 26, 36, 46, 56, 66, 76, 86, 96) includes at least one of the following: focusing structures (76a, 86a, 96a) providing a focal power higher than the distance focal power and the near focal power or diffusing structures (6a, 16a, 26a, 36a, 46a, 56a, 66a) leading to a diffusion of light passing the intermediate zone 6, 16, 26, 36, 46, 56, 66, 76, 86, 96),
- designing at least one of the clear distance zone (4, 14, 24, 34, 44, 54, 64, 74, 84, 94), the intermediate zone 6, 16, 26, 36, 46, 56, 66, 76, 86, 96) and the clear near zone (5, 15, 25, 35, 45, 55, 65, 75, 85, 95) such as to extend over the whole width of the representation of the spectacle lens (2, 12, 22, 32, 42, 52, 62, 72, 82, 92).

17. The computer-implemented method as claimed in claim 12 to 16 being further configured for manufacturing the spectacle lens designed according to claim 12 to claim 16.

18. A computer program for designing a spectacle lens (2, 12, 22, 32, 42, 52, 62, 72, 82, 92) for the purpose of a use of the design for a manufacture of the spectacle lens (2, 12, 22, 32, 42, 52, 62, 72, 82, 92), the computer program comprising instructions that, when executed on a computer, prompt the computer to perform the steps of the computer-implemented method as claimed in any of the claims 12 to 16.

Fig. 1

Fig. 2

Fig. 3

Fig. 4

**Fig. 5**

**Fig. 6**

Fig. 7

Fig. 8

Fig. 9

Fig. 10

EP 4 270 098 A2

Fig. 11

Fig. 12

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007092853 A2
- WO 199966366 A1
- US 2003058407 A1
- WO 2006004440 A2
- WO 2006034652 A1
- WO 2005055891 A1
- WO 2007041796 A1
- WO 2010075319 A2
- WO 2018026697 A1
- WO 2019152438 A1
- WO 2020014613 A1
- WO 2020113212 A1
- WO 2020180817 A1
- US 2017131567 A1
- EP 3553594 A1
- EP 3561578 A1
- WO 2019166653 A1
- WO 2019166654 A1
- WO 2019166655 A1
- WO 2019166657 A1
- WO 2019166659 A1
- WO 2019206569 A1
- WO 2016168746 A1
- CN 207249272 U
- CN 111796436 A
- EP 2115527 B1
- EP 2383603 B1
- WO 2012097213 A2, Neitz
- US 10302962 B2
- US 20190033619 A1
- US 20190235279 A1

### Non-patent literature cited in the description

- **SCHÄFFEL.** *Individualisierte Myopiebehandlung bei Kindern - Prof. Dr. Frank Schaeffel und Dr. Hakan Kaymak (Innovationssymposium 2019),* 19 January 2019
- **WERNER KÖPPEN.** Konzeption und Entwicklung von Progressivgläsern. *Deutsche Optiker Zeitung DOZ 10/95,* 42-46
- **WERNER KÖPPEN.** Design and Development of Progressive Lenses. *Deutsche Optiker Zeitung DOZ 10/95,* 42-46
- **EARL L. SMITH III et al.** Peripheral Vision Can Influence Eye Growth and Refractive Development in Infant Monkeys. *Invest Ophthalmol Vis Sci.,* November 2005, vol. 46 (11), 3965-3972
- **GUILLERMO M. PÉREZ et al.** Optical Characterization of Bangerter Foils. *IOVS,* January 2010, vol. 51 (1), 609-613